# EUROPÄISCHE PATENTSCHRIFT

(11) **EP 3 080 208 B1**
(45) Veröffentlichungstag und Bekanntmachung des Hinweises auf die Patenterteilung: **01.07.2020**
(21) Anmeldenummer: 14821565.0
(22) Anmeldetag: 15.12.2014
(51) Int. Cl.: C09C 1/36, C09C 1/40, C09C 3/10, C09C 1/02, C09C 1/30, C08K 7/22, C09D 5/02, C09D 7/62, C09D 7/40

(54) **INHALTSSTOFF FÜR EIN BESCHICHTUNGSMITTEL**
INGREDIENT FOR A COATING COMPOSITION
CONSTITUANTS POUR COMPOSITIONS DE REVÊTEMENT

(30) Priorität: 13.12.2013 DE 102013020575
(43) Veröffentlichungstag der Anmeldung: 19.10.2016
(73) Patentinhaber: Brillux GmbH & Co. KG, 48163 Münster (DE)
(72) Erfinder: HÖRSTING, Ingo, 48317 Drensteinfurt (DE)
(74) Vertreter: Cohausz & Florack
(86) Internationale Anmeldenummer: PCT/EP2014/077837
(87) Internationale Veröffentlichungsnummer: WO 2015/086858

(56) Entgegenhaltungen:
- EP-A1- 2 548 916
- WO-A1-2010/090596
- WO-A1-2013/044230
- WO-A1-2013/148307
- DATABASE WPI Week 201016 Thomson Scientific, London, GB; AN 2010-B77244 XP002737281, & JP 2010 031185 A (JSR CORP) 12. Februar 2010 (2010-02-12)

## Beschreibung

Die Erfindung betrifft ein Hohlteilchen, welches eine einen Hohlraum bildende äußere Schale und ein von der äußeren Schale umschlossenes, inneres Material umfasst. Derartige Hohlteilchen finden beispielsweise Verwendung als Inhaltsstoff in Beschichtungsmitteln, z.B. als Deckmittel in Dispersionsfarben. Die Erfindung betrifft ferner ein Verfahren zur Herstellung dieser Hohlteilchen sowie die Verwendung der Hohlteilchen in Beschichtungsmitteln und Prämixen für Beschichtungsmittel.

Bei Beschichtungsmitteln, insbesondere bei Dispersionsfarben, wird ein hohes Deckvermögen durch einen hohen Gehalt an Weißpigment, meistens Titandioxid, welches einen hohen Brechungsindex im Vergleich zum Polymerbindemittel hat, erreicht. Die hohen Kosten von Titandioxid führen dabei entsprechend zu hohen Kosten der Beschichtungsmittel, und man ist bestrebt, die Kosten für Dispersionsfarben durch Ersatzstoffe für das Weißpigment zu senken. Günstigere Dispersionsfarben verwenden anstelle des teuren Titandioxid billigere Füllstoffe wie z. B. Kreide, welche einen ähnlichen Brechungsindex wie das Polymerbindemittel haben. Ein hohes Deckvermögen wird dabei durch eine hohe Konzentration der Füllstoffe im getrockneten Film, also eine hohe Partikelvolumenkonzentration, erreicht, so dass neben Grenzflächen zwischen Kreide und Polymerbindemittel auch Grenzflächen zwischen Kreide und Luft entstehen. Aufgrund des höheren Brechungsindexunterschieds von Kreide zu Luft als von Kreide zu Polymerbindemittel wirken diese Lufteinschlüsse als Streuzentren für Licht, während Einschlüsse des Polymerbindemittels in der Regel transparent erscheinen. Jedoch führt die niedrige Konzentration an Polymerbindemittel in günstigen Dispersionsfarben mit einer hohen Füllstoffkonzentration aufgrund der unvollständigen Benetzung der Füllstoffpartikel mit Polymerbindemittel häufig zu einer schlechten Nassabriebbeständigkeit. Daher ist man bestrebt, kostengünstige Ersatzstoffe für das Weißpigment zu entwickeln, die sich zu Dispersionsfarben nach DIN EN 13300 mit gutem Deckvermögen nach DIN EN ISO 6504-3 bei gleichzeitiger, guter Nassabriebbeständigkeit nach DIN EN ISO 11998 verarbeiten lassen.

Aus der US 4,427,836 sind Hohlkügelchen bekannt, die in Dispersionsfarben Verwendung finden können. Das polymere Material der Hohlkügelchenschale hat dabei einen sehr ähnlichen Brechungsindex wie das Polymerbindemittel. Das Deckvermögen der Hohlkügelchen beruht auf der Tatsache, dass sich nach Trocknen der die Hohlkügelchen enthaltenden Dispersionsfarbe durch die Hohlkügelchen Lufteinschlüsse im Film befinden, die dann als Streuzentren wirken. Gleichzeitig sind die Hohlkügelchen im Film fester verankert als Füllstoffe und führen zu einer besseren Nassabriebbeständigkeit des Films. Diese Hohlkügelchen können als Ersatzstoff für Weißpigment verwendet werden, streuen jedoch nicht so effektiv wie Weißpigment und müssen daher in hoher Konzentration im trockenen Film vorhanden sein, was die Formulierungsmöglichkeiten einer Dispersionsfarbe einschränkt.

Aus der US 4,771,086 ist bekannt, weitgehend ladungsfreie Pigmentpartikel mit einem Polymermantel zu umhüllen. Die Umhüllung erfolgt dabei so, dass die Polymerhülle eng den Konturen der Partikeloberfläche folgt. Dabei ist kein Hohlraum zwischen der Polymerhülle und dem Pigmentpartikel vorgesehen. Die Umhüllung beugt dabei einerseits einer Agglomeration der Pigmentpartikel vor, andererseits legt sie den Mindestabstand zwischen den streuenden Pigmentpartikeln fest. Beide Effekte verbessern das Deckvermögen einer diese polymerumhüllten Partikel enthaltenden Dispersionsfarbe. Jedoch bedingt die enge Umkapselung der Partikel mit einem polymeren Material die Verwendung von Pigmentpartikeln, die einen signifikant höheren Brechungsindex als das polymere Material haben, was die Kosten der Partikel erhöht.

Aus der EP 2 161 304 A ist bekannt, Pigmente mit einem Brechungsindex von wenigstens 1,8 mit einem Polymermantel zu umhüllen. Der Polymermantel wird dabei auf ein das Pigmentpartikel dispergierendes erstes Polymer aufpolymerisiert. Der Polymermantel kann dabei auch unvollständig sein, jedoch ist kein Hohlraum zwischen dem Polymermantel und dem Partikel vorgesehen. Die Umhüllung beugt dabei einer Agglomeration der Pigmentpartikel vor und erhöht damit das Deckvermögen einer diese polymerumhüllten Partikel enthaltenden Dispersionsfarbe. Jedoch begrenzt die enge Umkapselung der Partikel mit einem polymeren Material die Auswahl an Pigmentpartikel auf solche, die einen Brechungsindex von mindestens 1,8 aufweisen.

Die JP 2010031185 A beschreibt ein Verfahren zur Verteilung eines Pigments und eines ungesättigten Monomers in einem wässrigen Medium, wobei das ungesättigte Monomer in einem ersten Polymerisationsschritt polymerisiert wird.

Die EP 2 548 916 A1 beschreibt einen organisch/anorganischen Kompositfüllstoff, der agglomerierte Partikel umfassend anorganische Primärpartikel und eine organische Harzphase, die die Oberfläche jedes anorganischen Primärpartikels beschichtet, umfasst.

Die WO 2010/090596 A1 beschreibt Silicahohlteilchen, auf deren Oberfläche ein Polymer kovalent aufgebracht ist.

Die WO 2013/044230 A1 beschreibt eine strahlungsstreuende Zusammensetzung umfassend eine Vielzahl an kolloidalen Kristallen oder Aggregaten von kolloidalen Kristallen, wobei jeder der Kristalle einen kolloidalen Array von Teilchen umfasst, so dass die Zusammensetzung Strahlung in einem Wellenlängenband in im Wesentlichen alle Richtungen streut.

Nachteilig an den im Stand der Technik beschriebenen Lösungen ist entweder die geringere Nassabriebbeständigkeit der Filme im Vergleich zu Titandioxid enthaltenden Filmen oder die hohlraumfreie Umkapselung der Partikel mit einer Polymerschicht, die die Verwendung von Pigmentpartikeln mit einem hohen Brechungsindex im Vergleich zum Polymerbindemittel erfordert und somit keine kostengünstige Alternative zu Titandioxid darstellt.

Der Erfindung liegt die Aufgabe zu Grunde, einen Inhaltsstoff für ein Beschichtungsmittel, insbesondere für Dispersionsfarben, bereitzustellen, welcher den erforderlichen Gehalt an Weißpigment wie Titandioxid reduziert und gleichzeitig ein hohes Deckvermögen des Beschichtungsmittels sowie eine gute Nassabriebbeständigkeit des Films gewährleistet.

Diese Aufgabe wird erfindungsgemäß durch ein Hohlteilchen gelöst, welches eine einen Hohlraum bildende äußere Schale und ein von der äußeren Schale zumindest teilweise umschlossenes inneres Material umfasst, wobei die äußere Schale einen Brechungsindex von 1,3 bis 2,5 und das innere Material einen Brechungsindex von 1,4 bis 3,2 aufweisen, und wobei das innere Material das Volumen des Hohlraums teilweise ausfüllt, wobei die äußere Schale ein polymeres Material enthält und das innere Material ausgewählt ist aus der Gruppe bestehend aus Kreide, Talkum, Dolomit, Aluminiumhydroxid, Gibbsitt, Calciumcarbonat, Calcit, Bariumsulfat, Glimmer, Quarz, Wollastonit, Kaolin, Kieselgur, Perlite, Feldspat, Silika-Sol, Kieselsäure, und Basalt und Mischungen davon.

Die einen Hohlraum bildende äußere Schale kann insbesondere auch Unterbrechungen aufweisen. Beispielsweise kann die äußere Schale netzartig ausgebildet sein. Insbesondere kann die äußere Schale des Hohlteilchens durch Löcher oder durch Einbettungen eines anderen Materials, insbesondere des inneren Materials, unterbrochen sein.

Das innere Material ist von der äußeren Schale zumindest teilweise umschlossen. Insbesondere kann das innere Material vollständig von der äußeren Schale umschlossen sein. Alternativ kann nur ein Teil des inneren Materials von der äußeren Schale umschlossen sein. Beispielsweise kann die äußere Schale des Hohlteilchens Löcher aufweisen, durch die ein Teil des inneren Materials hinausragt. Ferner kann das innere Material auch in die äußere Schale eingebettet sein, so dass ein Teil des inneren Materials von der äußeren Schale umschlossen ist.

Ohne sich auf eine bestimmte wissenschaftliche Theorie festzulegen, liegt der Erfindung der Gedanke zu Grunde, dass die nur teilweise Ausfüllung des Hohlteilchens mit einem zusätzlichen inneren Material für die Lichtstreuung relevante Brechungsindexunterschiede erzeugt. Besonders nach dem Trocknen eines die Hohlteilchen enthaltenden

Beschichtungsmittels weisen die Brechungsindexunterschiede eine für die Lichtstreuung relevante Größe auf, da dann in dem Hohlteilchen enthaltene Flüssigkeit heraus diffundiert ist. Auf diese Weise können Übergänge von Polymerbindemittel zu Luft und/oder Übergänge von Luft zu innerem Material und umgekehrt erzeugt werden. Durch das innere Material wird das Licht dann effektiv gestreut. Durch die zudem hohe lokale Partikelvolumenkonzentration bedingt durch das Vorhandensein von unter Umständen mehreren Partikeln des inneren Materials oder Konglomeraten aus dem inneren Material in den Hohlteilchen wird das Streuvermögen der Hohlteilchen durch die zahlreichen Übergänge von Luft zu innerem Material und umgekehrt zusätzlich verstärkt, was das Deckvermögen der erfindungsgemäßen Hohlteilchen erhöht. Für diesen Effekt erscheint die nur teilweise Ausfüllung der Hohlteilchen durch das innere Material besonders maßgeblich. Zudem sind die erfindungsgemäßen Hohlteilchen vorzugsweise durch ihre geringe Oberfläche und die Beschaffenheit der Schale besonders gut im Polymerbindemittel verankert. Mit den erfindungsgemäßen Hohlteilen kann daher eine hervorragende Nassabriebbeständigkeit eines die Hohlteilchen enthaltenden Beschichtungsmittels erzielt werden. Folglich können die erfindungsgemäßen Hohlteilchen eine signifikante Verbesserung des Deckvermögens bei erheblicher Reduzierung des Titandioxidgehalts und gleichzeitig hervorragender Nassabriebbeständigkeit bewirken. Dadurch entsteht eine deutliche Kostenreduktion der Dispersionsfarbe.

Nachfolgend wird die Erfindung unter Bezugnahme auf die beigefügten Zeichnungen näher erläutert.

In den Zeichnungen zeigen
- Fig. 1: eine schematische Darstellung erfindungsgemäßer Hohlteilchen im Querschnitt sowohl im a) nassen als auch b) im trockenen Zustand;
- Fig. 2: eine schematische Darstellung polymerer Hohlkugeln nach dem Stand der Technik im Querschnitt sowohl a) im nassen als auch b) im trockenen Zustand;
- Fig. 3: eine schematische zweidimensionale Darstellung von Partikeln aus innerem Material mit unterschiedlichem Belegungsgrad an organischem oder anorganischem Material und
- Fig. 4: eine schematische Darstellung erfindungsgemäßer Hohlteilchen im Querschnitt enthaltend a) einen einzelnen Partikel aus innerem Material (Füllstoffpartikel), b) ein Konglomerat von Partikeln aus innerem Material (Füllstoffkonglomerat) und c) ein Konglomerat von Partikeln aus innerem Material (Füllstoffkonglomerat) mit Grenzflächenkontakten im getrockneten Zustand.

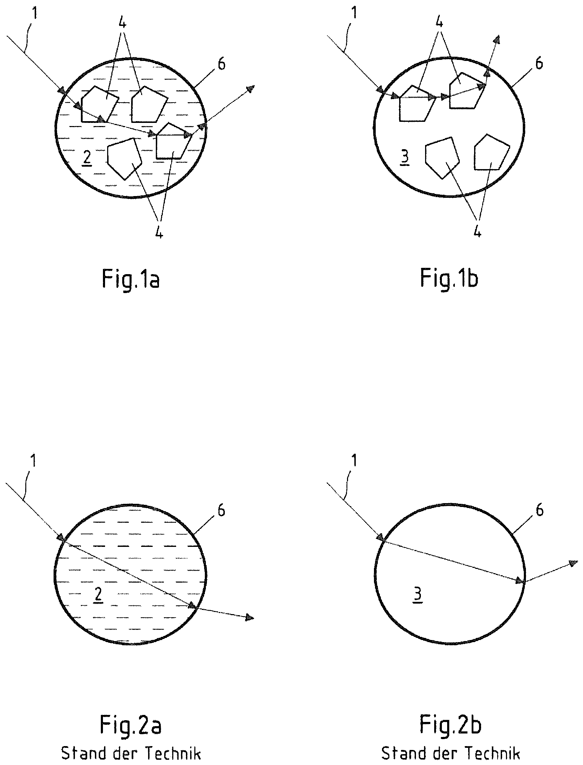

Figur 1 zeigt erfindungsgemäße Hohlteilchen enthaltend ein inneres Material (Füllstoff) a) im nassen Zustand und b) im getrockneten Zustand. Durch die hohe lokale Partikelvolumenkonzentration an innerem Material im Hohlteilchen wird einfallendes Licht 1 sowohl im nassen als auch im trockenen Zustand durch die Vielzahl an Medien (Flüssigkeit 2, Gas 3, inneres Material 4, äußere Schale 6) mit deutlich unterschiedlichen Brechungsindizes effektiv gestreut.

Figur 2 zeigt polymere Hohlkugeln nach dem Stand der Technik a) im nassen Zustand und b) im getrockneten Zustand. Wegen des geringen Brechungsindexunterschieds zwischen Flüssigkeit 2 und dem Polymerbindemittel sowie der äußeren Schale 6 wird das Licht 1 im nassen Zustand kaum gestreut. Im getrockneten Zustand wird das Licht beim Übergang von der äußeren Schale 6 zu den Lufteinschlüssen 3 effektiver als im nassen Zustand gestreut.

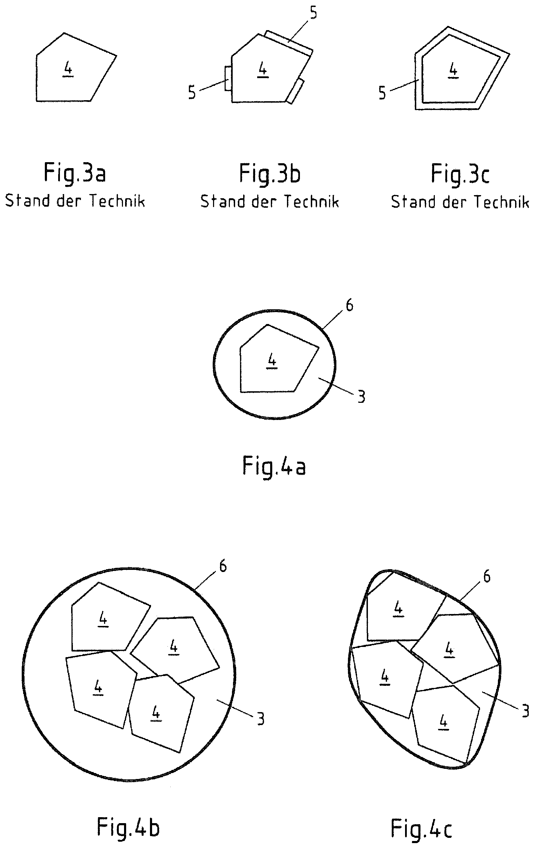

Figur 3 zeigt Partikel aus innerem Material (Füllstoffpartikel) 4, die a) nicht, b) teilweise und c) vollständig mit einem organischen Polymer oder/und einer anorganischen Verbindung 5 belegt sind.

Figur 4 zeigt erfindungsgemäße Hohlteilchen enthaltend a) einen einzelnen Partikel aus innerem Material 4 (Füllstoffpartikel) umschlossen von einer äußeren Schale 6, b) ein Konglomerat von Partikeln aus innerem Material 4 (Füllstoffkonglomerat) umschlossen von einer äußeren Schale 6 und c) ein Konglomerat von Partikeln aus innerem Material 4 (Füllstoffkonglomerat) umschlossen von einer äußeren Schale 6 mit Grenzflächenkontakten zur äußeren Schale 6.

Erfindungsgemäß geeignete Materialien für die äußere Schale der Hohlteilchen sind Materialien, die einen Brechungsindex von 1,3 bis 2,5, bevorzugt von 1,3 bis 1,7 haben. Damit unterscheidet sich der Brechungsindex deutlich zum Brechungsindex von Luft, welcher etwa 1 beträgt.

Wenn hier von Brechungsindex die Rede ist, so ist damit der Brechungsindex von Licht mit einer Wellenlänge von 589 nm (Natrium-D-Linie, erzeugt mittels Filterung oder durch eine monochromatische Lumineszenzdiode) bei einer Temperatur von 20°C gemeint. Der Brechungsindex wird mittels einem Refraktometer, bevorzugt einem Edelsteinrefraktometer bestimmt, indem der Prüfling auf das Prisma des Refraktometers gelegt und der Brechungsindex abgelesen wird. Bei Bedarf kann ein Tropfen einer hochbrechenden, so genannten Anderson Lösung (z.B. Diiodmethan) mit einem bekannten Brechungsindex als Kontaktflüssigkeit auf das Prisma des Refraktometers gegeben werden. Der Prüfling wird dann auf diesen Tropfen gelegt und der Brechungsindex kann abgelesen werden.

Erfindungsgemäße Hohlteilchen können auf verschiedene Arten hergestellt werden. Möglich ist es zum einen, das innere Material in einem Lösemittel zu dispergieren und die dispergierten Teilchen aus dem inneren Material anschließend z.B. durch eine Polyreaktion mit einer äußeren Schale zu umschließen. Um sicherzustellen, dass das innere Material das Hohlteilchen nicht vollständig ausfüllt, kann z.B. in einem weiteren Schritt die äußere Schale des Hohlteilchens durch ein geeignetes Quellungsmittel aufgebläht werden, welches anschließend wieder entfernt wird, so dass das innere Material das Hohlteilchen nur teilweise ausfüllt. Möglich ist es ferner, leere Hohlteilchen aus dem Material der äußeren Schale mit dem inneren Material zu befüllen. Hierzu können beispielweise dispergierte Hohlteilchen aus dem Material der äußeren Schale mit molekularen Vorläufern des inneren Materials versetzt werden, welche aufgrund des Konzentrationsunterschieds in besagte dispergierte Hohlteilchen hineindiffundieren und dort in Polyreaktionen, z.B. Polykondensationen, durch Nukleation von Keimen und deren anschließendem Wachstum bei geeigneter Reaktionsführung die dispergierten Hohlteilchen teilweise ausfüllen.

Geeignete Materialien für die äußere Schale sind allgemein bekannt und beispielsweise in der US 4,771,086, der US 4,427,836 und der EP 2 161 304 A beschrieben, auf weiche hier ausdrücklich Bezug genommen wird. In Frage kommen zum Beispiel anorganische oder organische Polymere, darunter Wasserglas (z.B. Natronwasserglas, Kaliwasserglas und/oder Lithiumwasserglas) sowie organische Polymere. Insbesondere geeignet sind organische polymere Materialien, die durch die sequentielle Polymerisation eines alkalisch quellbaren Polymers gefolgt von einem nicht-ionischen (d.h. keine ionisierbare Gruppe enthaltenden) Polymer erhalten wurden. Dabei kann das zunächst hergestellte, alkalisch quellbare Polymer als Saatpolymer bezeichnet werden, auf das ein nicht-ionisches Hüllenpolymer aufpolymerisiert wird. Die äußere Schale der Hohlteilchen kann sowohl das Saatpolymer als auch das Hüllenpolymer enthalten. Das Saatpolymer kann das Produkt einer wässrigen Emulsionspolymerisation eines zumindest teilweise ungesättigten Monomersystems sein. Bevorzugt enthält das Monomersystem eines oder mehrere monoethylenisch ungesättigte Monomere enthaltend eine Gruppe der Formel -HC=C<. Weiter bevorzugt enthält das Monomersystem Säuremonomere mit einer Carboxylgruppe. Besonders geeignete Monomere umfassen Acrylsäure, Methacrylsäure, (Meth)acryloxypropionsäure, Itakonsäure, Akonitsäure, Maleinsäure, Maleinsäureanhydrid, Fumarsäure, Crotonsäure, Maleinsäuremonomethylester, Fumarsäuremonomethylester und Itakonsäuermonomethylester.

Ein zumindest teilweise ungesättigtes Monomersystem kann insbesondere bedeuten, dass das Monomersystem ungesättigte Monomere enthält.

Wenn hier oder an anderer Stelle von (Meth)acryl-Verbindungen die Rede ist, so sind damit sowohl die entsprechenden Acryl- als auch Methacryl-Verbindungen gemeint.

Das zur Herstellung der äußeren Schale eingesetzte Saatpolymer kann beispielsweise durch Emulsionshomopolymerisation eines solchen Säuremonomers oder durch Copolymerisation zweier oder mehrerer solcher Säuremonomere erhalten werden. Vorzugsweise wird ein Säuremonomer oder eine Mischung von Säuremonomeren mit einem oder mehreren ethylenisch ungesättigten Monomeren mit nicht-ionischem Charakter mit einer oder mehreren ethylenisch ungesättigten Gruppen der Formel H₂C=C< polymerisiert. Bevorzugte Säuremonomere, die für das alkalisch quellbare Saatmonomer verwendet werden können, sind Acrylsäure und Methacrylsäure sowie Mischungen davon. Andere bevorzugte Säuremonomere, die verwendet werden können, umfassen Acryloxypropionsäure, Methacryloxypropionsäure, Acryloxyessigsäure, Methacryloxyessigsäure und/oder Itakonsäuremonomethylester.

Beispiele für monoethylenisch ungesättigte Monomere mit nicht-ionischem Charakter umfassen Styrol, Vinyltoluol, Ethylen, Vinylacetat, Vinylchlorid, Vinylidenchlorid, Acrylnitril, (Meth)acrylamid, verschiedene (C₁-C₂₀)Alkyl- oder (C₃-C₂₀)Alkenylester der Methacrylsäure wie z. B. Methylmethacrylat, Methylacrylat, Ethyl(meth)acrylat, Butyl(meth)acrylat, 2-Ethylhexyl(meth)acrylat, Benzyl(meth)acrylat, Lauryl(meth)acrylat, Oleyl(meth)acrylat, Palmityl(meth)acrylat und/oder Stearyl(meth)acrylat. Generell sind Saatcopolymere mit einem Säuremonomergehalt von wenigstens 5 Gew.%, bevorzugt wenigstens 10 Gew.%, genügend quellbar für die Zwecke der Erfindung. Das Saatpolymer kann durch Homopolymerisation eines additionspolymerisierbaren Carbonsäuremonomers zu 100% aus Säuremonomeren bestehen. Eine bevorzugte maximale Menge an Säuremonomer im ersten Saatpolymer beträgt etwa 70 Gew.%, bezogen auf die gesamte Monomermenge für das Saatpolymer.

Das Saatpolymer kann vorzugsweise als weitere Komponente eine kleine Menge eines polyethylenisch ungesättigten Monomers, wie Ethylenglykoldi(meth)acrylat, Allyl(meth)acrylat, 1,3-Butandioldi(meth)acrylat, Diethylenglykoldi(meth)acrylat, Trimethylolpropantrimethacrylat oder Divinylbenzol enthalten, deren Anteil im Bereich von etwa 0,1 bis 20 Gew.%, vorzugsweise 0,1 bis 3 Gew%, bezogen auf das Gesamtgewicht der Monomere des Saatpolymers liegt. Die im Allgemeinen verwendete Menge ist in etwa proportional zu der Menge an eingesetztem Säuremonomer. Butadien bildet eine Ausnahme hiervon, da es insbesondere in Mischungen mit Styrol oft als monoethylenisch ungesättigtes Monomer fungiert, so dass die Menge an Butadien, falls verwendet, von 30 bis 60 Gew.% des gesamten Monomergewichts für das Saatpolymer ausmachen kann.

Die Polymerisation des Saat- und des Hüllenpolymers kann in einem oder mehreren Schritten erfolgen. Das Molekulargewicht des in einem gegebenen Schritt gebildeten Polymers kann 100.000 zahlenmittleres Molekulargewicht oder weniger betragen. Wenn ein Kettenübertragungsmittel verwendet wird, kann das Molekulargewicht des in einem gegebenen Schritt gebildeten Polymers bis zu mehreren Millionen zahlenmittleres Molekulargewicht betragen.

Die zahlenmittleren Molekulargewichte der Polymere können z.B. durch Gelpermeationschromatographie (GPC) bestimmt werden, wie dem Fachmann allgemein bekannt ist.

Wenn 0,1 bis 20 Gew.% eines vorstehend erwähnten polyethylenisch ungesättigten Monomers bei der Herstellung des säuremonomerhaltigen Saatpolymers verwendet werden, erhöht sich das Molekulargewicht, unabhängig davon, ob Vernetzung auftritt. Die Verwendung des ethylenisch mehrfach ungesättigten Monomers ist bevorzugt, da es die Tendenz des Saatpolymers verringert, sich bei Behandlung mit einem Quellmittel aufzulösen. Wird das säuremonomerhaltige Saatpolymer auf Füllstoffpartikel aufpolymerisiert, kann es eine Dicke von bis zu 1 Mikrometer, bevorzugt von 0,2 bis 0,8 Mikrometer in nicht gequollenem Zustand aufweisen. Werden zunächst leere Hohlteilchen hergestellt, kann das säurehaltige Saatpolymer einen mittleren Durchmesser von etwa 0,05 bis etwa 1,0 Mikrometer, vorzugsweise 0,1 bis 0,5 Mikrometer, vorzugsweise 0,2 bis 0,5 Mikrometer in nicht gequollenem Zustand aufweisen.

Wenn hier oder an anderer Stelle von mittlerem Durchmesser die Rede ist, so ist damit der mittlere, volumenäquivalente Kugeldurchmesser gemeint. Den volumenäquivalenten Kugeldurchmesser erhält man bei Bestimmung des Durchmessers einer Kugel mit gleichem Volumen wie das betreffende Teilchen.

Zur Herstellung der äußeren Schale kann in einem nachfolgenden Schritt oder in nachfolgenden Schritten ein Hüllenpolymer auf das Saatpolymer, z.B. durch Emulsionspolymerisation, aufpolymerisiert werden. Die zur Herstellung des Hüllenpolymers verwendeten Monomere können jegliche der oben für die Herstellung des Saatpolymers genannten nicht-ionischen monoethylenisch ungesättigten Comonomere sein.

Die verwendeten Monomere und ihre relativen Anteile in beliebigen Copolymeren werden vorzugsweise so gewählt, dass das dadurch geformte Hüllenpolymer durchlässig ist für wässrige oder gasförmige, flüchtige, basische Quellmittel für das säuremonomerhaltige Saatpolymer, nicht jedoch für eine nicht-flüchtige Base. Trotz ihrer Hydrophobie können die unpolaren oder wenig polaren Monomere, wie Styrol, alpha-Methylstyrol, Vinyltoluol, Ethylen, Vinylchlorid und Vinylidenchlorid allein oder in Mischungen mit stärker polaren Monomeren in der obigen Liste, wie z.B. Vinylacetat, verwendet werden, dies jedoch vorzugsweise nicht in der ersten Stufe der Hüllenbildung.

Monomermischungen zur Herstellung des Hüllenpolymers können bis zu etwa 10 Gew.%, vorzugsweise jedoch nicht mehr als 5 Gew.% eines Säuremonomers, enthalten, wie sie vorstehend für die Herstellung des Saatpolymers genannt wurden. Allerdings sollte der Anteil an Säuremonomer im Hüllenpolymer vorzugsweise ein Drittel des Anteils an Säuremonomer im Saatpolymer nicht überschreiten. Der Gehalt an Säuremonomer dient einer oder beiden von zwei Funktionen, nämlich der Stabilisierung der erhaltenen Polymerdispersion und der Sicherstellung der Permeabilität des Hüllenpolymers gegenüber einer flüchtigen Base als Quellmittel für das Saatpolymer.

Wird das Hüllenpolymer auf inneres Material-umschließendes Saatpolymer aufpolymerisiert, so weist es vorzugsweise eine Dicke von bis zu 3 Mikrometern, bevorzugt von 0,2 bis 2 Mikrometern im nicht-gequollenen Zustand auf.

Werden zunächst leere Hohlteilchen hergestellt, ist die Menge an für das Hüllenpolymer abgeschiedenem Polymer vorzugsweise so bemessen, dass ein mittlerer Durchmesser des mehrschichtigen Polymerpartikels von etwa 0,07 bis etwa 4,5 Mikrometer, vorzugsweise etwa 0,1 bis etwa 3,5 Mikrometer, weiter bevorzugt etwa 0,2 bis etwa 2,0 Mikrometer im ungequollenen Zustand, erreicht wird, unabhängig davon ob das Hüllenpolymer in einem einzigen Schritt oder in mehreren Schritten gebildet wurde. Im ungequollenen Zustand beträgt das Verhältnis des Gewichts des Saatpolymers zum Gesamtgewicht der Polymere im Durchschnitt vorzugsweise von 1:4 bis 1:100, inbesondere von 1:8 bis 1:50.

Die vorstehend beschriebenen Materialien und Herstellungsweisen für die äußere Schale des Hohlteilchens sind allgemein bekannt und beispielsweise in der US 4,771,086, der US 4,427,836 und der EP 2 161 304 A beschrieben, auf welche hier ausdrücklich Bezug genommen wird.

Erfindungsgemäß ist vorgesehen, dass die Hohlteilchen ein inneres Material enthalten. Das innere Material weist vorzugsweise einen Brechungsindex auf, der sich vom Brechungsindex von Luft deutlich unterscheidet. Dadurch kann die Lichtstreuwirkung der Teilchen verstärkt werden. Bevorzugt hat das innere Material einen Brechungsindex von 1,4 bis 3,2, insbesondere von 1,4 bis 1,8.

Geeignete Materialien für das innere Material sind beispielsweise in CRC Handbook of Chemistry and Physics, 84th Edition, D. R. Lide (ed.), CRC Press, Boca Raton, Florida, 2003-2004, Seiten 4-149 bis 4-155 aufgeführt.

Erfindungsgemäß ist das innere Material ausgewählt aus der Gruppe bestehend aus Kreide, Talkum, Dolomit, Aluminiumhydroxid, Gibbsitt, Calciumcarbonat, Calcit, Bariumsulfat, Glimmer, Quarz, Wollastonit, Kaolin, Kieselgur, Perlite, Feldspat, Silika-Sol, Kieselsäure, und Basalt und Mischungen davon. Gemäß einer noch bevorzugten Ausführungsform der Erfindung ist das innere Material ausgewählt aus der Gruppe bestehend aus Calciumcarbonat, Talkum, Dolomit, Kaolin, Bariumsulfat und Mischungen davon.

Vorzugsweise ist das innere Material ausgewählt aus der Gruppe bestehend aus Kreide, Talkum, Dolomit, Aluminiumhydroxid, Gibbsitt, Calcit, Glimmer, Quarz, Wollastonit, Kaolin, Kieselgur, Perlite, Feldspat, Silika-Sol, Kieselsäure und Basalt und Mischungen davon. Weiter bevorzugt ist das innere Material ausgewählt aus der Gruppe bestehend aus Talkum, Dolomit, Aluminiumhydroxid, Gibbsitt, Glimmer, Wollastonit, Kaolin, Perlite, Feldspat, und Basalt und Mischungen davon. Noch bevorzugter ist das innere Material ausgewählt aus der Gruppe bestehend aus Talkum, Dolomit, Glimmer, Wollastonit, Kaolin, Perlite, Feldspat und Basalt und Mischungen davon. Noch weiter bevorzugt ist das innere Material ausgewählt aus der Gruppe bestehend aus Talkum, Glimmer, Wollastonit, Kaolin, Feldspat und Basalt und Mischungen davon.

Gemäß einer weiteren vorteilhaften Ausgestaltungsform der Erfindung enthält das Hohlteilchen neben dem inneren Material ein Gas und/oder eine Flüssigkeit, um hohe Brechungsindexdifferenzen sicherzustellen und damit die Streuwirkung zu verstärken. Ob das Hohlteilchen ein Gas oder ein Gas und/oder eine Flüssigkeit enthält hängt davon ab, ob die erfindungsgemäßen Hohlteilchen als Feststoff (z.B. in der getrockneten Dispersionsfarbe nach dem Aufbringen auf die Wand) oder als Suspension (z.B. in der flüssigen Dispersionsfarbe vor dem Aufbringen auf die Wand) vorliegen. Liegen die erfindungsgemäßen Hohlteilchen als Feststoff vor, enthalten die Hohlteilchen vorwiegend ein Gas, liegen sie als Suspension vor, enthalten sie vorwiegend eine Flüssigkeit.

Vorzugsweise enthält das Hohlteilchen Gas und/oder Flüssigkeit in einer Menge von 0,01 bis 60 Vol.%, bevorzugt von 2 bis 30 Vol.%, bezogen auf das Gesamtvolumen des Hohlraums. Gemäß einer bevorzugten Ausgestaltung der Erfindung handelt es sich bei dem Gas um Luft.

Gemäß einer weiteren bevorzugten Ausgestaltung der Erfindung handelt es sich bei der Flüssigkeit um Wasser, eine wässrige Lösung und/oder ein Lösemittel. Das Lösemittel kann beispielsweise ausgewählt sein aus der Gruppe bestehend aus Texanol, Ethanol, Isopropanol, Isobutanol, Methoxypropanol, Butylglykol, Butyldigkykol, Propylenglykol, Isoparaffin und Testbenzin, sowie Mischungen daraus.

Vorzugsweise weist das erfindungsgemäße Hohlteilchen eine kugel-, rotationsellipsoid-, oder polyederartige Form auf. Bei der Quellung nimmt das Hohlteilchen im Allgemeinen eine regelmäßige Form einer Kugel, eines Rotationsellipsoids und/oder eines Polyeders an. Nach Entfernung des Quellungsmittels kann das Hohlteilchen, z.B. durch die Ausbildung von Eindellungen und/oder Ausbeulungen, seine regelmäßige Form verlieren. Ist dies der Fall, weist das Hohlteilchen, abhängig von der Ausgangsform, eine kugel-, rotationsellipsoid- oder polyederartige Form auf. Objekte mit der Form eines Rotationsellipsoids sind beispielsweise unter anderem Rugbybälle oder Linsen. Beispiele für Polyeder sind unter anderem Quader, Würfel, Oktaeder und/oder Ikosaeder.

In einer bevorzugten Ausführungsform der Erfindung beträgt der mittlere Durchmesser der Hohlteilchen von 0,1 bis 10 Mikrometer, vorzugsweise von 0,1 bis 5 Mikrometer, insbesondere von 0,2 bis 2 Mikrometer.

Eine Möglichkeit zur Herstellung der erfindungsgemäßen Hohlteilchen besteht darin, ein Teilchen (bzw. Partikel) aus innerem Material durch die äußere Schale des Hohlteilchens zu umhüllen. Das Teilchen aus dem inneren Material kann durch die Unterschiede der Brechungsindizes zwischen dem Polymerbindemittel und dem eingeschlossenen Gas und/oder der eingeschlossenen Flüssigkeit sowie zwischen dem Gas und/oder der Flüssigkeit und dem Teilchen aus dem inneren Material als zusätzliches Streuzentrum dienen und so die Streuwirkung des Hohlteilchens verstärken.

Denkbar ist in diesem Zusammenhang ferner, mehrere Teilchen aus dem inneren Material durch das Hohlteilchen zu umhüllen. Die Teilchen aus dem inneren Material können durch die Unterschiede der Brechungsindizes zwischen dem Polymerbindemittel und dem eingeschlossenen Gas und/oder der eingeschlossenen Flüssigkeit sowie zwischen dem Gas und/oder der Flüssigkeit und dem Teilchen aus dem inneren Material als zusätzliche Streuzentren dienen und so die Streuwirkung vervielfältigen.

Denkbar ist schließlich auch, ein poröses Konglomerat aus dem inneren Material durch das Hohlteilchen zu umhüllen. Das Konglomerat aus dem inneren Material kann durch die Unterschiede der Brechungsindizes zwischen dem Polymerbindemittel und dem eingeschlossenen Gas und/oder der eingeschlossenen Flüssigkeit sowie zwischen dem Gas und/oder der Flüssigkeit und dem Teilchen aus dem inneren Material durch die Vielzahl an durch die Porosität bedingten Gas und/oder Flüssigkeitseinschlüssen eine Vielzahl an Streuzentren bieten, und so die Streuwirkung vervielfältigen.

Gemäß einer bevorzugten Ausführungsform der Erfindung beträgt der mittlere Durchmesser der Teilchen des inneren Materials von 0,05 bis 1 Mikrometer, bevorzugt von 0,1 bis 0,5 Mikrometer. Dabei kann das eingeschlossene Teilchen aus dem inneren Material oder die eingeschlossenen Teilchen aus dem inneren Material oder das eingeschlossene Konglomerat aus dem inneren Material keinen oder beliebig viele Kontakte zur Innenwand der Schale des Hohlteilchens aufweisen.

Im Folgenden werden geeignete Herstellungsmaßnahmen für die erfindungsgemäßen Hohlteilchen beschrieben. Grundsätzlich können die erfindungsgemäßen Hohlteilchen in einem einstufigen oder in einem zweistufigen Verfahren hergestellt werden.

Das einstufige Verfahren zur Herstellung erfindungsgemäßer Hohlteilchen beinhaltet folgende Schritte:
a. Dispergieren eines Materials mit einem Brechungsindex von 1,4 bis 3,2, bevorzugt von 1,4 bis 1,8, noch bevorzugt ausgewählt aus der Gruppe der oben angeführten Teilchen aus dem inneren Material in einem wässrigen Medium. Das wässrige Medium enthält vorzugsweise Wasser und 0 bis 30 Gew.%, bezogen auf das Gewicht des Mediums, an einer oder mehreren wasserlöslichen Komponenten; und
b. Durchführen einer Polyreaktion in Gegenwart der Suspension aus Schritt a., um das Material zu umschließen,
wobei das Material aus Schritt a. ausgewählt ist aus der Gruppe bestehend aus Kreide, Talkum, Dolomit, Aluminiumhydroxid, Gibbsitt, Calciumcarbonat, Calcit, Bariumsulfat, Glimmer, Quarz, Wollastonit, Kaolin, Kieselgur, Perlite, Feldspat, Silika-Sol, Kieselsäure, und Basalt und Mischungen davon, wobei das Verfahren die Zugabe einer Base als Quellmittel umfasst und wobei das umschließende Material durch Polyreaktion eines zumindest teilweise oder gänzlich ungesättigten Monomersystems erhalten wird.

Zusätzlich kann in einer vorteilhaften Ausgestaltung der Erfindung das umschließende Material mit Hilfe eines wässrigen, basischen Quellungsmittels, das das polymere Material durchdringt, aufgebläht werden.

In einer weiter bevorzugten Ausgestaltung der Erfindung wird das umschließende Material durch Polyreaktion eines teilweise oder gänzlich ungesättigten Monomersystems erhalten.

Geeignete Verfahren und Hilfsmittel wie z.B. Tenside zur Dispergierung der Teilchen aus dem inneren Material sind z.B. in der US 4,771,086 und in der EP 2 161 304 A beschrieben. Für die Dispergierung der Teilchen aus dem inneren Material in Schritt a. des erfindungsgemäßen Verfahrens können Hilfsmittel wie Tenside verwendet werden. Als Tenside kommen sowohl niedermolekulare als auch polymere Tenside in Frage. Dabei wird in dem Reaktionsmedium mittels nicht-ionischer oder ionischer Tenside eine sterische Barriere oder Hülle, die während des Verlaufs der Polyreaktion fortbesteht, auf der Oberfläche der Partikel adsorbiert und die Partikel dadurch suspendiert.

Geeignete nicht-ionische Stabilisatoren mit einer ausreichend hohen Dispergierwirkung weisen vorzugsweise einen so genannten HLB-Wert von mindestens 13 auf. Unter HLB-Wert versteht der Fachmann auf dem Gebiet der Tenside die Möglichkeit, die Oberflächenaktivität eines Stoffes empirisch oder durch Schätzung oder durch Näherungsberechnung zu bestimmen.

Es gibt eine Vielzahl von nicht-ionischen oberflächenaktiven Stabilisierungsmitteln mit einem HLB-Wert von etwa 13 oder höher. Diese sind beispielsweise in Becher, "Emulsions: Theory and Praxis", 2. Auflage, Reinhold Publishing Corp., beschrieben (vgl. dort insbesondere S. 235-238).

Jedes nicht-ionische Tensid, das die obigen Kriterien erfüllt, ist geeignet für die Verwendung in der vorliegenden Erfindung. Besonders geeignete Tenside sind polyethoxylierte Derivate von verschiedenen hydrophoben Gruppen, einschließlich polyethoxylierte Ester von Fettsäuren und Ether von polyethoxylierten Fettalkoholen und Alkyl-substituierten Phenolen oder dergleichen mit einer genügend langen Kohlenstoffkette, um das Tensid ausreichend hydrophob für die Adsorption auf der Partikeloberfläche zu machen, im allgemeinen also mindestens etwa 8 und vorzugsweise 12 oder mehr Kohlenstoffatome, wobei eine PhenylGruppe äquivalent zu einer Kohlenstoffkette mit vier Kohlenstoffatomen ist. Die Länge der Kohlenstoffkette im hydrophoben Teil kann auch größer sein, so dass praktisch jede der vorhandenen Fettsäuren und Fettalkoholen als hydrophobe Gruppe umfasst ist.

Die Anzahl der Ethylenoxid (EtO)-Gruppen in der Polyethylenoxid-Kette kann von 10 bis 200 oder mehr variieren, vorzugsweise wenigstens 40 bis 50 EtO-Gruppen bis 150.

Ein besonders bevorzugtes Tensid ist ein Octyl-oder Nonylphenol polyethyloxylat mit 50 bis 150 EtO-Gruppen. Es ist nicht erforderlich, dass die hydrophile Kette ausschließlich aus EtO-Gruppen gebildet wird, wenn der notwendige Mindest-HLB-Wert durch das gewählte Tensid erreicht wird, aber in praktischer Hinsicht verfügen nahezu alle solche Mittel mit einem HLB-Wert in dieser Größenordnung über Ethylenoxid-Ketten.

Beispiele für anionische Tenside umfassen Natriumlaurylsulfat, Natriumdodecylbenzolsulfonat und das Natriumsalz von Tertoctylphenoxyethoxypoly(39)ethoxyethylsulfat.

Alternativ kann auch ein Homo- oder ein Copolymer eines Aminophosphorsäure-funktionellen Polymers zur Dispergierung verwendet werden, wie in der EP 2 161 304 A beschrieben. "Aminophosphorsäure-funktionelles Polymer" umfasst hier jedes Polymer mit zumindest einer Amingruppe und mindestens einer Phosphorsäuregruppe. Mit "aminophosphorsäure-funktionelles Monomer" ist jedes Monomer, das mindestens eine radikalisch polymerisierbare Vinylgruppe, mindestens eine Amingruppe, und mindestens eine Phosphorsäuregruppe enthält, gemeint. Der hier verwendete Begriff "Phosphorsäuregruppe" bedeutet, dass es sich um eine der folgenden Gruppen handelt: -P(O)(OR)(OH),-OP(O)(OR)(OH), -OP(O)(OH)R', -P(O)(OH)R', wobei R H oder Alkyl oder Aryl und R' Alkyl oder Aryl sein kann. Ebenfalls in der Definition des Begriffs "Phosphorsäuregruppe" eingeschlossen sind Salze der oben genannten Gruppen. Das aminophosphorsäure-funktionelle Polymer kann jedes Polymer mit mindestens einer Amingruppe und mindestens einer Phosphorsäuregruppe, die statistisch über die Polymer-Hauptkette verteilt sein können, sein, ein Block Copolymer mit einem einzelnen Amin- und Phosphorsäuregruppen-enthaltenden Block und mindestens einem weiteren Block, der nicht sowohl Amin- und Phosphorsäuregruppen enthält oder ein Kammpfropfcopolymer mit einer Hauptkette, die Amin- und Phosphorsäuregruppen enthält und Zähnen, die nicht sowohl Amin- als auch Phosphorsäuregruppen enthalten. Der Amin- und Phosphorsäuregruppen-enthaltende Block kann terminal oder im inneren der Polymerkette sein. Gemäß einer bevorzugten Ausführungsform der Erfindung enthält das Polymer mindestens zwei Amin- und zwei Phosphorsäuregruppen, weiter bevorzugt mindestens drei Amin- und drei Phosphorsäuregruppen, besonders bevorzugt mindestens vier Amin- und vier Phosphorsäuregruppen. Die Anzahl der Amin- und Phosphorsäuregruppen kann gleich oder unterschiedlich sein. Es ist bevorzugt, dass das Verhältnis von Amin- zu Phosphorsäuregruppen bezogen auf die Molverhältnisse von 10:1 bis 1:10, weiter bevorzugt, von 3:1 bis 1:4, am bevorzugtesten von 1,5:1 bis 1:3 beträgt.

Das aminophosphorsäure-funktionelle Polymer kann als Lösungspolymer in Wasser oder einem nicht-wässrigen Lösemittel hergestellt werden oder als Massepolymer. Das aminophosphorsäure-funktionelle Polymer kann nach einem beliebigen geeigneten Polymerisationsverfahren hergestellt werden, beispielsweise durch Additionspolymerisation von ethylenisch ungesättigten Monomeren, wie Acryl-, Styrol- oder Vinylmonomeren. Polymere, die sowohl Amin- als auch Phosphorsäuregruppen enthalten, können durch Copolymerisation von mindestens einem aminfunktionellen Monomer und mindestens einem phosphorsäure-funktionellen Monomer hergestellt werden, oder indem mindestens ein Monomer, das sowohl Amin- als auch Phosphorsäuregruppen enthält, in der Monomermischung vorhanden ist.

Als ein weiteres Beispiel können Polymere, die sowohl Amin- als auch Phosphorsäuregruppen enthalten, durch Polymerisation von ethylenisch ungesättigten Monomeren hergestellt werden, die in der Monomermischung funktionelle Monomere enthalten, deren Seitengruppen zu Amin- oder Phosphorsäuregruppen umgewandelt werden können, nachdem die Polymerisation abgeschlossen ist. Beispiele für Monomere, deren Seitengruppen in Amine umgewandelt werden können, nachdem die Polymerisation abgeschlossen ist, umfassen Isocyanat-funktionelle Monomere, die mit primär-tertiären oder sekundär-tertiären Diaminen umgesetzt werden können, Epoxid-funktionelle und halomethylbenzyl-funktionelle Monomere, die mit Aminen umgesetzt werden können. Beispiele für Monomere, deren Seitengruppen in Phosphorsäuren umgewandelt werden können, nachdem die Polymerisation abgeschlossen ist, umfassen Isocyanat-funktionelle Monomere, die mit Aminophosphaten oder Aminophosphonaten umgesetzt werden können, und Alkoholfunktionelle Monomere, die mit Phosphorylierungsmitteln wie Pyrophosphorsäure umgesetzt werden können.

Block-Copolymere, die einen aminophosphorsäure-funktionellen Polymerblock enthalten, können nach jedem bekannten Verfahren hergestellt werden, das in der Lage ist, solche Polymere zu erzeugen. Beispielsweise können Block Copolymere, die einen aminophosphorsäure-funktionellen Polymerblock enthalten, durch lebende radikalische Polymerisation von ethylenisch ungesättigten Monomeren hergestellt werden, wobei die Monomerzusammensetzung einer Monomereinspeisung mindestens ein Amin-funktionelles und mindestens ein Phosphorsäure-funktionelles, ungesättigtes Monomer enthält. Ferner können Block Copolymere, die einen aminophosphorsäure-funktionellen Polymerblock enthalten, auch durch die lebende radikalische Polymerisation von ethylenisch ungesättigten Monomeren hergestellt werden, die in der Monomermischung funktionelle Monomere enthalten, die in Amin- oder Phosphorsäuregruppen umgewandelt werden können, nachdem die Polymerisation beendet ist.

Kammpfropfcopolymere, die ein aminophosphorsäure-funktionelles Polymer-Rückgrat enthalten, können durch jedes bekannte Verfahren hergestellt werden, das in der Lage ist, solche Polymere zu erzeugen. Beispielsweise können Kammpfropfcopolymere, die eine aminophosphorsäure-funktionelle Polymer-Hauptkette enthalten, durch radikalische Polymerisation von ethylenisch ungesättigten Monomeren hergestellt werden, wobei die Monomerzusammensetzung mindestens ein ungesättigtes Makromonomer, ein Amin-funktionelles, ungesättigtes Monomer und mindestens ein Phosphorsäure-funktionelles, ungesättigtes Monomer enthält. Weiterhin können Kammpfropfcopolymere die eine aminophosphorsäure-funktionelle Polymer-Hauptkette enthalten, beispielsweise durch eine lebende radikalische Polymerisation von ethylenisch ungesättigten Monomeren hergestellt werden, die in der Monomermischung funktionelle Monomere enthält, die in Amin- oder Phosphorsäuregruppen umgewandelt werden können, nachdem die Polymerisation beendet ist. Gemäß einer bevorzugten Ausführungsform der Erfindung ist das aminophosphorsäure-funktionelle Polymer entweder ein Block Copolymer oder ein Kammpfropfcopolymer.

Das aminophosphorsäure-funktionelle Polymer wird typischerweise durch die Polymerisation von ethylenisch ungesättigten Monomeren hergestellt. Erfindungsgemäß geeignete Monomere umfassen Styrol, Butadien, alpha-Methylstyrol, Vinyltoluol, Vinylnaphthalin, Ethylen, Propylen, Vinylacetat, Vinylversatat, Vinylchlorid, Vinylidenchlorid, Acrylnitril, Methacrylnitril, (Meth)acrylamid, verschiedene (C₁-C₄₀)Alkylester der (Meth)acrylsäure, beispielsweise Methyl(meth)acrylat, Ethyl(meth)acrylat, n-Butyl(meth)acrylat, 2-Ethylhexyl(meth)acrylat, Cyclohexyl(meth)acrylat, n-Octyl(meth)acrylat, n-Decyl(meth)acrylat, n-Dodecyl(meth)acrylat, Tetradecyl(meth)acrylat, Lauryl(meth)acrylat, Oleyl(meth)acrylat, Palmityl(meth)acrylat und Stearyl(meth)acrylat, andere (Meth)acrylate, wie Isobornyl(meth)acrylat, Benzyl(meth)acrylat, Phenyl(meth)acrylat, 2-Bromethyl(meth)acrylat, 2-Phenylethyl(meth)acrylat und 1-Naphthyl(meth)acrylat, Alkoxyalkyl(meth)acrylate, wie Ethoxyethyl(meth)acrylat, Mono-, Di- und Trialkylester von ethylenisch ungesättigten Di- und Tricarbonsäuren und Anhydriden, wie Ethylmaleat, Dimethylfumarat, Trimethylaconitat und Ethylmethylitaconat, Alkohol enthaltende Monomere, wie Hydroxyethyl(meth)acrylat, Hydroxypropyl(meth)acrylat, Hydroxybutyl(meth)acrylat; anorganische Säuren enthaltende Monomere, wie Sulfoethyl(meth)acrylat und 2-(Meth)acrylamido-2-methylpropansulfonsäure, Carbonsäuren enthaltende Monomere, wie (Meth)acrylsäure, Itaconsäure, Fumarsäure und Maleinsäure.

Beispiele für geeignete Amin-funktionelle Monomere umfassen Dimethylaminoethyl(meth)acrylat, Dimethylaminopropyl(meth)acrylamid, t-Butylaminoethyl (meth) acrylat.

Beispiele für geeignete Phosphorsäure-funktionelle Monomere umfassen Phosphoethyl(meth)acrylat, phosphorylierte Polypropylenoxid(meth)acrylate, wie Sipomer PAM-200, phosphorylierte Polyethylenoxid(meth)acrylate, wie Sipomer PAM-100 und Vinylphosphonsäure.

Das aminophosphorsäure-funktionelle Polymer, statistische Copolymer, der Amin- und Phosphorsäuregruppen enthaltende Block eines Block Copolymers, oder die Amin- und Phosphorsäuregruppen enthaltende Hauptkette eines Kammpfropfcopolymers können ein zahlenmittleres Molekulargewicht von 500 bis 200.000, vorzugsweise von 1000 bis 50.000, weiter bevorzugt von 1.000 bis 15.000 und insbesondere von 1000 bis 5000 aufweisen.

Wenn das aminophosphorsäure-funktionelle Polymer ein Block Copolymer oder ein Kammpfropfcopolymer ist, können der Block oder die Kammzähne, welche nicht die Amin- oder die Phosphorsäuregruppen enthalten, jeweils ein zahlenmittleres Molekulargewicht von 750 bis 200.000, bevorzugt von 1000 bis 50.000, weiter bevorzugt von 1500 bis 25.000 und am bevorzugtesten von 5.000 bis 15.000 aufweisen.

Die zahlenmittleren Molekulargewichte der Polymere können z.B. durch GPC bestimmt werden, wie dem Fachmann allgemein bekannt ist.

Versuche haben gezeigt, dass der Dispergierungsschritt einfacher ist, wenn das aminophosphorsäure-funktionelle Polymer wasserlöslich ist. Das aminophosphorsäure-funktionelle Polymer kann durch die Aufnahme von ausreichend Amin- oder Phosphorsäuregruppen sowie von anderen wasserlöslichen Monomeren wie Alkoholfunktionellen Monomeren, z.B. Hydroxyethyl(meth)acrylat, Amid-funktionellen Monomeren, z.B. (Meth)acrylamid, säurefunktionellen Monomeren, z.B. (Meth)acrylsäure und Sulfoethyl(meth)acrylat oder Kombinationen davon wasserlöslich gemacht werden.
Der notwendige Gehalt an wasserlöslichem Monomer, um den aminophosphorsäure-funktionellen Polymerblock oder das Polymer oder die Kammzähne wasserlöslich zu machen, hängt vom Molekulargewicht und von der Beschaffenheit der Comonomere, die in der Zusammensetzung der aminophosphorsäure-funktionellen Polymere, Blöcke oder Kammzähne enthalten sind, ab, wie dem Fachmann allgemein bekannt ist. Bevorzugt ist das aminophosphorsäure-funktionelle Polymer wasserlöslich. Wenn das aminophosphorsäure-funktionelle Polymer ein Block Copolymer oder ein Kammpfropfcopolymer ist, ist es bevorzugt, dass der Block oder die Kammzähne, die nicht die Amin- und Phosphorsäure-Blöcke oder die -Zähne sind, jeweils für sich wasserlöslich sind.

Die Dispergierung kann durch beliebige, gemeinhin bekannte Methoden zur Dispergierung von Teilchen in wässrigen Medien durchgeführt werden, darunter das Mahlen in Hochgeschwindigkeitsdispersatoren oder das Mahlen in Rührwerks- oder Kugelmühlen. Es ist schwierig, die Menge an Tensid, die in der Praxis für das erfindungsgemäße Verfahren benötigt wird, anzugeben, da die erforderliche Menge für die Abscheidung auf einer suspendierten Phase an Feststoffpartikeln grundsätzlich sowohl durch die Partikelgröße als auch durch die Anzahl der vorhandenen Partikel bestimmt wird, die zusammen die Gesamtfläche ergeben, die durch adsorbierte Tenside bedeckt werden muss, um eine sterische Barriere um jedes der Partikel zu bilden. Beispielsweise liegt für Partikel mit unterschiedlichen mittleren Durchmessern von lediglich 0,007 bis 0,07 Mikrometer, was nur ein Bruchteil des Größenbereichs der Erfindung ausmacht, eine 50-fache Veränderung der Oberfläche von etwa 1000 bis etwa 23 Quadratmeter pro Gramm vor. Vorzugsweise beträgt die Menge an Stabilisierungsmittel etwa 0,1 bis etwa 25 Gew.%, insbesondere 0,5 bis 10 Gew.%, bezogen auf das Gesamtgewicht aus Monomer und Teilchen des inneren Materials, wobei das untere Ende des breiteren Bereichs insbesondere anwendbar ist für große Teilchen, während das obere Ende insbesondere für sehr feine Teilchen gilt.

Dem Fachmann sind verschiedene Instrumente und Verfahren zur Bestimmung der Stabilität von Suspensionen bekannt. Ein geeigneter ist beispielsweise der sogenannten "Handlotion"-Test, in dem eine kleine Menge der Suspension in der Handfläche einer Hand platziert und gerieben oder mit den Fingern der anderen Hand in einer kreisförmige Bewegung ausgebreitet wird. Wenn die Emulsion sich gleichmäßig und einheitlich mit einem Creme-Gefühl verteilt, hat die Suspension eine gute Stabilität, während, wenn es gerinnt oder in Klumpen ausflockt, die Suspension deutlich instabil ist. Eine einmal in instabilem Zustand befindliche Suspension kann nicht mehr danach durch Zugabe von mehr oder weniger Stabilisierungsmittel oder andere Reaktionsbestandteile stabilisiert werden.

Wenn die Polymerisation, wie bevorzugt, in Schritten durchgeführt wird, d.h. in einem ersten Schritt nur ein Bruchteil von etwa 5 bis 10 Gew.% des Monomers, bezogen auf die Gesamtmenge an Monomer, zugegeben wird, um eine anfängliche Polymerisation durchzuführen, und weitere Mengen an Monomer danach allmählich oder Schritt für Schritt zusammen mit entsprechenden Mengen an Polymerisationsinitiator zugeführt werden, um die Polymerisation fortzusetzen, so ist in der Regel die Einleitung des Verfahrens der kritische Schritt hinsichtlich der Stabilisierung, und eine Probe des Reaktionsprodukts wird vorzugsweise am Ende der Verfahrenseinleitung getestet. Wenn Destabilisierung bereits stattgefunden hat, muss die Reaktionsmasse entsorgt werden und eine neue Reaktionsführung mit entsprechenden Anpassungen in den Mengen von Tensid und gegebenenfalls anderen Bestandteilen sind nötig.

Für den Schritt b. des erfindungsgemäßen Verfahrens können die bereits erwähnten anorganischen und organischen Polymere als geeignete Materialien verwendet werden. Inbesondere geeignet sind organische Polymere Materialien, die durch die sequentielle Polymerisation eines alkalisch quellbaren Polymers gefolgt von einem nicht-ionischen (das heißt keine ionisierbare Gruppe enthaltenden) Polymer erhalten werden. Dabei kann das zunächst hergestellte, alkalisch quellbare Polymer, das sozusagen einen Kern bildet, als Saatpolymer bezeichnet werden, auf das ein nicht-ionisches Hüllenpolymer aufpolymerisiert wird. Sowohl das Saat- als auch das Hüllenpolymer können in der äußeren Schale der Hohlteilchen enthalten sein. Das Saatpolymer kann das Produkt einer wässrigen Emulsionspolymerisation eines oder mehrerer monoethylenisch ungesättigter Monomere enthaltend eine Gruppe der Formel -HC=C< und eine Carboxylgruppe sein. Geeignete Monomere sind die oben erwähnten Säuermonomere. Das Saatpolymer kann durch Emulsionshomopolymerisation eines solchen Säuremonomers oder durch Copolymerisation zweier oder mehrerer solcher Säuremonomere erhalten werden. In bevorzugten Ausführungsformen wird ein Säuremonomer oder eine Mischung von Säuremonomeren mit einem oder mehreren ethylenisch ungesättigten Monomeren aus der Liste der Monomere mit nicht-ionischem Charakter mit einer oder mehreren ethylenisch ungestättigten Gruppen der Formel HzC=C< polymerisiert.

Bevorzugte Säuremonomere, die für das alkalisch quellbare Saatpolymer verwendet werden können, sind Acrylsäure und Methacrylsäure sowie Mischungen davon, andere bevorzugte Säuremonomere, die verwendet werden können, umfassen Acryloxypropionsäure, Methacryloxypropionsäure, Acryloxyessigsäure, Methacryloxyessigsäure und Itakonsäuremonomethylester. Als nicht-ionische Monomere kommen insbesondere die oben erwähnten nicht-ionischen Monomere in Frage. Generell sind Saatcopolymere mit einem Säuremonomergehalt von wenigstens 5 Gew.%, bevorzugt wenigstens 10 Gew.% genügend quellbar für die Zwecke der Erfindung, aber es mag Umstände geben, unter denen wegen der Hydrophobie bestimmter Comonomere oder deren Kombinationen in Verbindung mit dem Hydrophobie/Hydrophilie-Gleichgewicht eines bestimmten Säuremonomers das Copolymer weniger als 5 Gew.% Säuremonomer oder deutlich weniger als 5 Gew.% davon benötigt, und unter letzteren Umständen beträgt ein bevorzugter Anteil an Säuremonomer am Gesamtgewicht der Saatpolymer-ergebenden Monomermischung wenigstens 10 Gew.%. Das Saatpolymer kann durch Homopolymerisation eines additionspolymerisierbaren Carbonsäuremonomers zu 100% aus Säuremonomeren bestehen. Eine bevorzugte maximale Menge an Säuremonomer im ersten Saatpolymer beträgt etwa 70 Gew.% bezogen auf die gesamte Monomermenge für das Saatpolymer.

Das Saatpolymer kann vorzugsweise als weitere Komponente eine kleine Menge eines polyethylenisch ungesättigten Monomers, wie Ethylenglykoldi(meth)acrylat, Allyl(meth)acrylat, 1,3-Butandioldi(meth)acrylat, Diethylenglykoldi(meth)acrylat, Trimethylolpropantrimethacrylat oder Divinylbenzol enthalten, deren Anteil im Bereich von etwa 0,1 bis 20 Gew.%, vorzugsweise 0,1 bis 3 Gew.%, bezogen auf das Gesamtgewicht der Monomere des Saatpolymers liegt. Die verwendete Menge ist vorzugsweise in etwa proportional zu der Menge an eingesetztem Säuremonomer. Butadien bildet eine Ausnahme hiervon, da es insbesondere in Mischungen mit Styrol oft als monoethylenisch ungesättigtes Monomer fungiert, so dass die Menge an Butadien, falls verwendet, von 30 bis 60 Gew.% des gesamten Monomergewichts für das Saatpolymer ausmachen kann.

Die Polymerisation des Saat- und des Hüllenpolymers kann in einem oder mehreren Schritten erfolgen. Bevorzugt reicht das zahlenmittlere Molekulargewicht des in einem gegebenen Schritt gebildeten Polymers von 100.000 oder tiefer, wenn ein Kettenübertragungsmittel verwendet wird, bis zu mehreren Millionen zahlenmittlere Molekulargewichte. Wenn 0,1 bis 20 Gew.% eines vorstehend erwähnten polyethylenisch ungesättigten Monomers bei der Herstellung des Säurepolymer verwendet werden, erhöht sich das zahlenmittlere Molekulargewicht, unabhängig davon ob Vernetzung auftritt. Die Verwendung des ethylenisch mehrfach ungesättigten Monomers verringert die Tendenz des Saatpolymers sich aufzulösen, wenn das Mehrstufen-Polymer mit einem Quellmittel für das Saatpolymer behandelt wird. Das Saatpolymer kann dabei eine Dicke von bis zu 1 Mikrometer, bevorzugt von 0,2 bis 0,8 Mikrometer in nicht gequollenem Zustand aufweisen.

In einem nachfolgenden Schritt oder in nachfolgenden Schritten kann ein Hüllenpolymer auf das Saatpolymer, z.B. durch Emulsionspolymerisation, aufpolymerisiert werden. Dies kann im gleichen Reaktionsgefäß, in dem das Saatpolymer hergestellt wurde, durchgeführt werden, oder das Reaktionsmedium, das die dispergierten Teilchen enthält, kann zur Durchführung in einen anderen Reaktionsbehälter transferiert werden.

Die zur Herstellung des Hüllenpolymers verwendeten Monomere können jegliche der oben für die Herstellung des Saatpolymers genannten nicht-ionischen monoethylenisch ungesättigten Comonomere sein. Die verwendeten Monomere und ihre relativen Anteile in beliebigen Copolymeren sollten so sein, dass das dadurch geformte Hüllenpolymer durchlässig ist für wässrige oder gasförmige, flüchtige, basische Quellmittel für das säuremonomerhaltige Saatpolymer, aber nicht für eine nicht-flüchtige Base.

Trotz ihrer Hydrophobie können die äußerst unpolaren oder wenig polaren Monomere, wie Styrol, alpha-Methylstyrol, Vinyltoluol, Ethylen, Vinylchlorid und Vinylidenchlorid allein oder in Mischungen mit stärker polaren Monomeren in der obigen Liste, wie z.B. Vinylacetat verwendet werden, außer im ersten Schritt der Hüllenpolymerbildung.

Monomermischungen zur Herstellung des Hüllenpolymers können bis zu etwa 10 Gew.%, vorzugsweise jedoch nicht mehr als 5 Gew.% eines Säuremonomers, enthalten, wie sie vorstehend für die Herstellung des Saatpolymers genannt wurden. Allerdings sollte der Anteil an Säuremonomer im Hüllenpolymer nicht ein Drittel des Anteils an Säuremonomer im Saatpolymer überschreiten. Der Gehalt an Säure-Monomer dient einer oder beiden von zwei Funktionen, nämlich der Stabilisierung der erhaltenen Polymerdispersion und der Sicherstellung der Permeabilität des Hüllenpolymers gegenüber einer flüchtigen Base als Quellmittel für das Saatpolymer.

Vorzugsweise wird die Menge an für das Hüllenpolymer abgeschiedenen Polymer so bemessen, dass es auf den Teilchen eine Dicke von bis zu 3 Mikrometern, bevorzugt von 0,5 bis 2 Mikrometern im nicht-gequollenen Zustand hat, unabhängig davon, ob das Hüllenpolymer in einem einzigen Schritt oder in mehreren Schritten gebildet wurde.

Bei der Herstellung des Saat- und des Hüllenpolymers kann ein Polymerisationsinitiator eingesetzt werden. Als Polymerisationsinitiator kommt insbesondere ein in wässrigen Emulsionspolymerisationen üblicher wasserlöslicher Radikalstarter in Frage. Der Radikalstarter wird vorzugsweise ausgewählt aus der Gruppe bestehend aus Wasserstoffperoxid, tert-Butylperoxid, oder ein Alkalimetall (Natrium, Kalium oder Lithium) und Ammoniumpersulfat oder Mischungen daraus bzw. ein Gemisch eines solchen Initiators mit einem Reduktionsmittel, wie ein Sulfit, insbesondere einem Alkalimetallmetabisulfit, - hydrosulfit oder -hyposulfit und/oder Natriumformaldehydsulfoxylat. Auf diese Weise kann ein Redoxsystem gebildet werden.

Der im erfindungsgemäßen Verfahren eingesetzte Initiator wird vorzugsweise in einer Menge von 0,01 bis 4 Gew.%, bezogen auf das Monomergewicht, verwendet. In einem Redoxsystem kann eine entsprechende Menge (0,01 bis etwa 4 Gew.%) eines Reduktionsmittel verwendet werden.

Für viele Polymerisationen ist eine Temperatur im Bereich von 10°C bis 100°C praxisgerecht. Für Persulfatsysteme liegt die Temperatur vorzugsweise im Bereich von 60°C bis 90°C. In Redoxsystemen liegt die Temperatur vorzugsweise im Bereich von 30°C bis 70°C, vorzugsweise unter etwa 60°C, besonders bevorzugt im Bereich von 30°C bis 45°C.

Die Polymerisation des Hüllenpolymers kann im gleichen Reaktionsgefäß, in dem das Saatpolymer hergestellt wurde, durchgeführt werden, oder das Reaktionsmedium, das die dispergierten Teilchen enthält, kann zur Durchführung in einen anderen Reaktionsbehälter transferiert werden.

Die Quellung des mehrstufigen, heterogenen Polymers mit einem inneren, säuremonomerhaltigen Saatpolymer kann beispielsweise dadurch erfolgen, dass die Teilchen mit einem wässrigen, basischen Quellmittel versetzt werden, das das Hüllenpolymer durchdringt und das Saatpolymer aufquellt. Durch die Zugabe des basischen Quellmittels wird der pH-Wert auf etwa 6 oder höher eingestellt (Neutralisation). Dabei kann eine teilweise Verschmelzung der äußeren Peripherie des Saatpolymers in die Poren der inneren Peripherie des Hüllenpolymers und/oder auch eine teilweise Vergrößerung oder Ausbeulung des Hüllenpolymers und des Teilchens insgesamt auftreten. Wenn das Quellmittel durch Trocknen entfernt wird, wird durch die Schrumpfung des Saatpolymers normalerweise eine oder mehrere Mikroporen ausgebildet, deren Größe und Ausmaß von der Widerstandskraft des Hüllenpolymers abhängt, zu seinen ursprünglichen Ausmaßen zurückzukehren. Als Quellmittel für säurehaltige Saatpolymere sind Ammoniak, Ammoniumhydroxid oder ein flüchtiges, niederes, aliphatisches Amin, wie Trimethylamin und Triethylamin geeignet.

Das oder die Monomere des Hüllenpolymers können so gewählt werden, dass sie ein Hüllenpolymer mit einer relativ moderaten bis hohen Glasübergangstemperatur Tᵢ erzeugen. Tᵢ ist die scheinbare Übergangstemperatur zweiter Ordnung oder Wendepunktstemperatur, die durch Auftragen des Schubmoduls gegen die Temperatur gefunden wird. Standardmethoden zur Bestimmung der Tᵢ sind dem Fachmann bekannt, beispielsweise wird eine bequeme Methode zur Bestimmung des Schubmoduls und der Übergangstemperatur durch I. Williamson, British Plastics 23, 87-90, 102 (September 1950) beschrieben. Der hier verwendete Tᵢ-Wert ist derjenige, der bei 300 kg/cm² bestimmt wird.

Das verwendete Saatpolymer ist vorzugsweise relativ hart bzw. ist durch ein mehrfach ungesättigtes Monomer vernetzt. Bevorzugt werden für die Bildung von Mikrohohlräumen Monomere oder ihre relativen Anteile im Hüllenpolymer-erzeugenden Schritt so gewählt, dass ein Hüllenpolymer mit einer Tᵢ von wenigstens 25°C und vorzugsweise von 50°C bis 100°C erzeugt wird. Die Quellung und das nachfolgende Entfernen des Quellmittels begünstigt dann die Bildung und Beibehaltung der Mikrohohlräume.

Die Quellung kann bei einer Temperatur, die der Tᵢ entspricht, oder etwas darüber durchgeführt werden, um ein schnelles Eindringen des Quellmittels durch das Hüllenpolymer zu begünstigen, um das Saatpolymer zu quellen und um durch Erweichung des Hüllenpolymers dem Saatpolymer eine größere Freiheit zur Expansion zu bieten. Nach der Expansion durch die Quellmittel im gewünschten Ausmaß können die gequollenen Teilchen auf eine Temperatur unterhalb ihrer Tᵢ gekühlt werden, um das Hüllenpolymer zu verfestigen. Dann wird das Quellmittel durch Trocknen bei niedriger Temperatur (zumindest teilweise) entfernt, was in der Ausbildung von Mikrohohlräumen resultiert. Für die besten Ergebnisse für Mikrohohlräume, ist es zweckmäßig, das Wasser aus den Kernen schnell zu entfernen. Langsames Trocknen bei hoher Luftfeuchtigkeit kann sich schädlich auf die Mikrohohlraumbildung auswirken.

In einer weiter bevorzugten Ausführungsform der Erfindung wird das Hüllenpolymer vernetzt, indem der Monomermischung zur Bildung des Hüllenpolymers 1 bis 50 Gew.%, bezogen auf das Monomergesamtgewicht in der Mischung, eines polyethylenisch ungesättigten Monomers, wie eines von denen vorstehend zur Herstellung des Saatpolymers erwähnten, zugesetzt werden.

Die Vernetzung des Hüllenpolymers dient dazu, es strukturell stabiler zu machen, so dass beim Trocknen der gequollenen Teilchen zur Entfernung der Quellmittel die Schrumpfung des gequollenen Saatpolymers Mikrohohlräume erzeugt, aber das Hüllenpolymer dem Kollaps widersteht, so dass der oder die gebildeten Mikrohohlräume innerhalb des Teilchens im Wesentlichen erhalten bleiben.

Ein Verfahren, das die Bildung eines vernetzten Hüllenpolymers verwendet, besteht darin, die dispergierten Polymerpartikel durch Neutralisation des Säure-enthaltenden Saatpolymers kurz vor dem Schritt der Polymerisation der vernetzten Phase des Hüllenpolymers, oder vor Beendigung dieses Schritts zu quellen, wenn der Gehalt an polyethylenisch ungesättigten Monomer darin mehr als etwa 5 Gew.% der verwendeten Monomermischung beträgt, so dass der letztgenannte Schritt auf den gequollenen Teilchen durchgeführt wird und den Erhalt der Struktur begünstigt, wenn Hohlräume in der nachfolgenden Entfernung des Quellmittels hergestellt werden. In dieser zuletzt genannten Ausführungsform, in der das Hüllenpolymer vernetzt ist, kann dies in einem einzigen Hüllenpolymerbildungsschritt durchgeführt werden oder es kann unter Verwendung eines mehrschrittigen Hüllenpolymerbildungsverfahren, in dem das polyethylenisch ungesättigte, vernetzende Monomer im ersten Hüllenpolymerbildungsschritt weggelassen wird, aber in späteren Hüllenpolymerbildungsschritten zugegeben wird. Häufig erfolgt die Vernetzung auch in diesem mehrschrittigen Verfahren an der Grenzfläche zwischen dem säurehaltigen Saatpolymer und dem umgebenden Hüllenpolymer, so dass die expandierte Struktur des Hüllenpolymers dazu neigt, nach der Entfernung des Ammoniaks oder anderer Quellmittel aus dem Saatpolymer erhalten zu bleiben, was zur Ausbildung von Mikrohohlräumen im Inneren des Teilchens führt.

Alternativ können die erfindungsgemäßen Hohlteilchen in einem zweistufigen Verfahren hergestellt werden. In diesem zweistufigen Verfahren werden in der ersten Stufe zunächst leere Hohlteilchen hergestellt, in welche anschließend in einer zweiten Stufe beispielsweise molekulare Vorläufer durch Osmose hineindiffundieren und sich in den Hohlteilchen durch Polyreaktionen zu größeren Teilchen vernetzen können.

Gegenstand der Erfindung ist demgemäß auch ein Verfahren zur Herstellung erfindungsgemäßer Hohlteichen umfassend
i. Durchführen einer Polyreaktion zur Herstellung eines alkalisch quellbaren Polymers;
ii. Durchführen einer Polyreaktion zur Beschichtung des alkalisch quellbaren Polymers mit einem Polymer, das nach dem Aufquellen eine im Wesentlichen dimensionsstabile Hülle bilden kann;
iii. Quellen des alkalisch quellbaren Polymers durch Zugabe von Base;
iv. Entfernen und/oder Neutralisieren der Base unter Ausbildung von Hohlteilchen;
v. Zugabe eines oder mehrerer molekularer Vorläufer, die nach einer Polyreaktion ein inneres Material bilden können, zu einer Dispersion der Hohlteilchen;
vi. Starten der Polyreaktion gemäß Schritt v. durch Einstellen von Bedingungen, die für die Polyreaktion benötigt werden; und
vii. Abbrechen der Polyreaktion.

Vorzugsweise werden die Hohlteilchen aus Schritt iv. vor der Zugabe der molekularen Vorläufer, die nach einer Polyreaktion ein inneres Material bilden können, isoliert. Weiter bevorzugt wird in einem zusätzlichen Schritt vor Schritt v. eine Dispersion der Hohlteilchen aus Schritt iv. bereitgestellt. Noch bevorzugter sind die Bedingungen der Dispersion in Schritt v. so gewählt, dass die Polyreaktion noch nicht startet. Zu den Bedingungen, die für das Starten der Polyreaktion benötigt werden, können insbesondere die Konzentration des oder der molekularen Vorläufer, die Temperatur der Dispersion, der pH der Dispersion und/oder die Zugabe weiterer Stoffe wie Initiatoren gehören.

Für die Schale der in der ersten Stufe hergestellten, leeren Hohlteilchen können erfindungsgemäß die oben erwähnten anorganischen und organischen Polymere als geeignete Materialien verwendet werden. Insbesondere geeignet sind organische polymere Materialien, die durch die sequentielle Polymerisation eines alkalisch quellbaren Polymers gefolgt von einem nicht-ionischen (das heißt keine ionisierbare Gruppe enthaltenden) Polymer erhalten werden.

Geeignete Verfahren zur Herstellung der leeren Hohlteilchen sind aus der US 4,427,836 bekannt. Grundsätzlich wird dabei, ähnlich wie im einstufigen Verfahren beschrieben, zunächst das Saatpolymer gebildet, auf das das Hüllenpolymer aufpolymerisiert wird. Die äußere Schale der Hohlteilchen kann sowohl das Saat- als auch das Hüllenpolymer enthalten. Wie im einstufigen Verfahren können das Saat- und das Hüllenpolymer das Produkt einer wässrigen Emulsionshomo- oder copolymerisation sein. Für das Saat- und das Hüllenpolymer geeignete Monomere entsprechen den vorstehend für das einstufige Verfahren beschriebenen Monomeren. Dabei kann es sich sowohl um ein Homo- als auch um ein Copolymer handeln. Bezüglich der Mengen an unterschiedlichen Monomeren, zum Einsatz von Vernetzern, zum Molekulargewicht des in einem Schritt gebildeten Monomers, der Basendurchlässigkeit der Monomermischungen, der Tᵢ der resultierenden Polymere, dem Initiator für die Polymerisation des Saat- und des Hüllenpolymers, der Reihenfolge der Polymerisationschritte und für die Temperatur der Durchführung der Polymerisation gelten dieselben Angaben und Überlegungen wie vorstehend für das einstufige Verfahren dargelegt.

Das im zweistufigen Verfahren eingesetzte säurehaltige Saatpolymer kann einen durchschnittlichen Durchmesser von etwa 0,05 bis etwa 1,0, vorzugsweise 0,1 bis 0,5, vorzugsweise 0,2 bis 0,5 Mikrometer in nicht gequollenem Zustand aufweisen. Dies gilt unabhängig davon, ob das Saatpolymer in einem ein- oder mehrschrittigen Verfahern hergestellt wurde.

Die Menge an für das Hüllenpolymer abgeschiedenen Polymers wird vorzugsweise so bemessen, dass ein mittlerer Durchmesser des mehrschichtigen Polymerpartikels von etwa 0,07 bis etwa 4,5 Mikrometer, vorzugsweise etwa 0,1 bis etwa 3,5 Mikrometer, weiter bevorzugt etwa 0,2 bis etwa 2,0 Mikrometer im ungequollenen Zustand (das heißt, bevor durch eine Neutralisierung der pH-Wert auf etwa 6 oder höher eingestellt wurde), erreicht wird, unabhängig davon ob das Hüllenpolymer in einem einzigen Schritt oder in mehreren Schritten gebildet wurde. Im ungequollenen Zustand beträgt das Verhältnis des Gewichts des Saatpolymers zum Gesamtgewicht im Durchschnitt von 1:4 bis 1:100, vorzugsweise von 1:8 bis 1:50.

Ähnlich wie eingangs bereits für das einstufige Verfahren erläutert, können auch im zweistufigen Verfahren das Saatpolymer und das Hüllenpolymer je in einem einzigen Schritt der sequentiellen Polyreaktion für Saat- und Hüllenpolymer hergestellt werden. Ebenso möglich ist, dass die Herstellung der beiden Komponenten mehrere Schritte umfasst.
Im Unterschied zum einstufigen Verfahren kann ein erster Schritt der Polyreaktion im zweistufigen Verfahren der vorliegenden Erfindung die Herstellung eines Keimpolymers sein, welches in Form von kleinen, dispergierten, im wässrigen Polyreaktionsmedium unlöslichen Polymerteilchen vorliegt.

Dieses Keimpolymer kann, muss aber nicht, ein beliebiges Säuremonomer enthalten, jedoch liefert es Teilchen kleinster Größe, die die Keime darstellen, auf die das Saatpolymer aus Säuremonomer mit oder ohne nicht-ionischen Comonomeren aufpolymerisiert wird.

Erfindungsgemäß können für die Polymerisation dieselben nicht-ionischen oder anionischen Tenside entweder allein oder in Mischungen verwendet werden wie sie eingangs bereits für das einstufige Verfahren beschrieben wurden.

Im Unterschied zum einstufigen Verfahren kann im zweistufigen Verfahren der Anteil an Tensid 0 sein und beträgt vorzugsweise bis etwa 0,3 Gew.%, bezogen auf das Gewicht des in der ersten Stufe der Polyreaktion vorgelegten Monomers, wenn ein Persulfat-Initiator verwendet wird. Durch die Durchführung der Polyreaktion unter Beibehaltung eines niedrigen Tensidgehalts, wird das in nachfolgenden Schritten gebildete Polymer auf den bereits existierenden, dispergierten Polymerteilchen aus dem vorhergehenden Schritt deponiert. Generell sollte die Menge an Tensid unter derjenigen gehalten werden, die der kritischen Mizellenkonzentration für ein bestimmtes Monomersystem entspricht, um ein unimodales Produkt zu erhalten, allerdings wurde festgestellt, dass in einigen Systemen die kritische Mizellenkonzentration des Tensids etwas überschritten werden kann, ohne dass eine übermäßige Anzahl von dispergierten Mizellen gebildet wird.

Die Konzentration des Tensids wird vorzugsweise niedrig gehalten, um die Anzahl der Mizellen während der verschiedenen Schritte der Polymerisation zu steuern, so dass die Abscheidung des neu gebildeten Polymers in jedem Schritt auf die in den vorherigen Stufen gebildeten, dispergierten Mizellen oder Partikel erfolgt. Jedoch können polymodale Produkte durch Einschließen eines Emulgators oder Tensids in einer oder mehreren der späteren Monomerbeschickungen erhalten werden.

Erfindungsgemäß werden die so erhaltenen Polymere mit einem inneren säurehaltigen Saatpolymer gequollen, wenn die Teilchen mit einem wässrigen, basischen Quellmittel versetzt werden, das das Hüllenpolymer durchdringt und das Saatpolymer aufquellt. Dabei gelten dieselben Angaben und Überlegungen bezüglich der Tᵢ der Polyemere, der Durchlässigkeit gegenüber Basen der Polymere, der verwendeten Basen, der Verwendung von Vernetzern, des Quellverfahrens, der Quelltemperatur, der erhaltenen Strukturen, der Temperatur nach erfolgter Quellung, der Temperatur zur Entfernung des Quellmittels und des Verfahrens zur Entfernung des Quellmittels wie für das einstufige Verfahren.

Erfindungsgemäß wird in der zweiten Stufe des Verfahrens eine Dispersion der in der ersten Stufe hergestellten Hohlkügelchen mit molekularen Vorläufern für die oben erwähnten Füllstoffe Kreide, Talkum, Dolomit, Aluminiumhydroxid, Gibbsitt, Calciumcarbonat, Calcit, Bariumsulfat, Glimmer, Quarz, Wollastonit, Kaolin, Kieselgur, Perlite, Feldspat, Silika-Sol, Kieselsäure, Titandioxid, Zinkoxid und Basalt und Mischungen davon versetzt.

Durch Zugabe von Säure oder Base wird der pH Wert so eingestellt, dass eine rasche Polyreaktion der molekularen Vorläufer im Inneren der Hohlteilchen eine teilweise Ausfüllung mit Füllstoffen bewirkt. Hierzu ist es nötig, nach einer bestimmten Reaktionszeit durch Änderung des pH Wertes eine Weiterreaktion der gebildeten Füllstoffpartikel zu unterbinden. Auf diese Art kann die Größe der eingeschlossenen Füllstoffpartikel bequem kontrolliert werden. Geeignete pH Werte für die jeweiligen Systeme finden sich beispielsweise in C. J. Brinker, G. W. Scherer, "Sol-Gel Science - The Physics and Chemsitry of Sol-Gel Processing", Academic Press, Inc., San Diego, 1990, insbesondere Seiten 21-91 und Seite 104.

Die erfindungsgemäßen Hohlteilchen können durch Filtrieren oder Dekantieren von dem flüssigen Medium, das sie umgibt, isoliert werden. Sofern vorhanden, kann das Quellmittel durch Trocknen oder Verdampfen unter solchen Bedingungen entfernt werden, dass die gebildeten Mikroporen zurückbleiben. Diese Ausführungsform der Hohlteilchen ist mehr oder weniger rieselfähig und kann verpackt, verkauft und geliefert oder vor der Verwendung gelagert werden. Das so erhaltene trockene Pulver kann auch in Beschichtungen auf Basis organischer Lösungsmittel verwendet werden, vorausgesetzt dass die äußere Schale der Hohlteilchen nicht löslich ist in dem organischen Lösungsmittel.

Die erfindungsgemäßen Hohlteilchen können für verschiedene Zwecke eingesetzt werden. Insbesondere eignen sie sich zur Herstellung von Beschichtungsmitteln, bevorzugt von Anstrichmitteln, inbesondere von wässrigen Dispersionsfarben, Lacken und/oder Putzen.

Demgemäß betrifft die Erfindung auch Beschichtungsmittel, welche die erfindungsgemäßen Hohlteilchen enthalten. Für diese Zwecke können die erfindungsgemäßen Hohlteilchen in trockenem Zustand oder in Form einer wässrigen Dispersion direkt dem Beschichtungsmittel zugesetzt werden.

Das erfindungsgemäße Beschichtungsmittel kann, bezogen auf die Gesamtzusammensetzung, folgende Komponenten enthalten:
- 0,5 bis 30 Gew.% der erfindungsgemäßen Hohlteilchen,
- 0,5 bis 40 Gew.% mindestens eines filmbildenden Polymers,
- 0 bis 70 Gew.% eines anorganischen Füllstoffs und/oder anorganischen bzw. organischen Pigments,
- 0 bis 10 Gew.% Hilfsmittel ausgewählt aus der Gruppe bestehend aus Verdicker, Netz- und/oder Dispergiermittel, Entschäumer, Stabilisatoren, Filmbildehilfsmittel, Neutralisationsmittel, Substratbenetzer, oberflächenaktive Substanzen wie Verlaufsmittel und/oder Kratzschutzmittel, Konservierungsmittel,
- Wasser und/oder Lösemittel.

Das erfindungsgemäße Beschichtungsmittel enthält 0,5 bis 30 Gew.%, bezogen auf die Gesamtzusammensetzung, erfindungsgemäße Hohlteilchen. Durch die Verwendung der erfindungsgemäßen Hohlteilchen kann der Gehalt an Titandioxid verringert oder sogar auf null gesenkt werden, wobei trotzdem ein kostengünstiges Beschichtungsmittel mit einem sehr hohen Deckvermögen und einer hervorragenden Nassabriebbeständigkeit entsteht.

Gemäß einer bevorzugten Ausführungsform der Erfindung enthält das erfindungsgemäße Beschichtungsmittel, bezogen auf die Gesamtmenge des Beschichtungsmittels, 1 bis 20 Gew.%, insbesondere 2 bis 12 Gew.% oder 3 bis 8 Gew.% erfindungsgemäße Hohlteilchen.

Das erfindungsgemäße Beschichtungsmittel enthält ferner 0,5 bis 40 Gew.%, mindestens eines filmbildenden Polymers. Bevorzugte filmbildende Polymere sind Homo- und/oder Copolymere, deren Monomere ausgewählt sind aus der Gruppe bestehend aus Carbonsäurevinylester mit 3-20 Kohlenstoffatomen, N-Vinylpyrrolidon, Vinylaromaten, Vinylhalogeniden, ethylenisch ungesättigten Carbonsäuren, deren Ester, deren Amide oder deren Ahnydride, Nanohybriddispersionen, Wasserglas, Silikonharzemulsionen, wässrige Polyurethandispersionen, Styrolacrylaten, alpha-Olefinen und 1,3-Dienen in Form wässriger Polymerdispersion oder in Wasser redispergierbarer Polymerpulver, sowie Mischungen daraus. Besonders bevorzugt ist ein filmbildendes Polymer ausgewählt aus der Gruppe bestehend aus Vinylacetat-Homopolymeren, Vinylacetat-Ethylen-Copolymeren, Vinylacetat-Ethylen-Acrylat-Terpolymeren, Vinylacetat-Ethylen-Vinylchlorid-Terpolymere; Vinylacetat-Maleinsäureester-Copolymere, Acrylat-Dispersionen, Vinylester von Versatic-Säuren und Mischungen hiervon. Am bevorzugtesten wird ein Styrol-Acrylat verwendet. Die Polymere weisen zahlenmittlere Molekulargewichte von 1.000 bis 100.000 g/mol, bevorzugt von 5.000 bis 50.000 g/mol auf.

Gemäß einer bevorzugten Ausführungsform der Erfindung enthält das erfindungsgemäße Beschichtungsmittel, bezogen auf die Gesamtmenge des Beschichtungsmittels, 1 bis 25 Gew.%, insbesondere 2 bis 15 Gew.% oder 3 bis 10 Gew.% filmbildendes Polymer.

Das erfindungsgemäße Beschichtungsmittel enthält ferner Wasser und/oder Lösemittel.

Das erfindungsgemäße Beschichtungsmittel kann ferner 0 bis 70 Gew.% eines anorganischen Füllstoffs und/oder Pigments oder Mischungen aus unterschiedlichen Füllstoffen und/oder Pigmenten enthalten.

Der anorganische Füllstoff kann in dem erfindungsgemäßen Beschichtungsmittel insbesondere in einer Menge von 5 bis 60 Gew.%, insbesondere 10 bis 50 Gew.% oder 15 bis 40 Gew.%, bezogen auf die Gesamtmenge des Beschichtungsmittels, enthalten sein. Bevorzugt ist der Füllstoff ausgewählt aus der Gruppe bestehend aus Kreide, Talkum, Dolomit, Aluminiumhydroxid, Gibbsitt, Calciumcarbonat, Calcit, Bariumsulfat, Glimmer, Quarz, Wollastonit, Kaolin, Kieselgur, Perlite, Feldspat, Silika-Sol, Kieselsäure, und Basalt und Mischungen davon.

Das Pigment kann in dem erfindungsgemäßen Beschichtungsmittel insbesondere in einer Menge von 0,5 bis 25 Gew.%, insbesondere 0,5 bis 15 Gew.%, enthalten sein. Es kommen sowohl anorganische als auch organische Pigmente in Frage. Bevorzugt ist das Pigment ausgewählt aus der Gruppe bestehend aus Titandioxid, Zinkoxid, Eisenoxid und Buntpigmente, wie zum Beispiel Eisenoxide, Ruß, Ultramarin, Indigo, Azopigmente, Polycyclische Pigmente (z.B. Phthalatcyanin), Metallkomplexverbindungen und Mischungen davon.

Als weiteren Bestandteil kann das Beschichtungsmittel Hilfsmittel in einer Menge von bis zu 10 Gew.% enthalten. Unter den Hilfsmitteln sind hier sowohl herkömmliche Verdicker wie Cellulosen, Celluloseether, Stärke, Polysaccharide, Guarkernmehle, Schichtsilikate, Polyurethan- und/oder Acrylatverdicker, Silikone sowie standardmäßig eingesetzte Entschäumer (z.B. Mineralölentschäumer, Siliconentschäumer), Netz- und/oder Dispergiermittel (z.B. Polyacrylate und/oder Polyphosphate), Stabilisatoren, Filmbildehilfsmittel (z.B. Weichmacher auf Basis von Phthalaten, Estern und/oder, Glykolen), Neutralisationsmittel, oberflächenaktive Substanzen wie Verlaufsmittel und/oder Kratzschutzmittel sowie Konservierungsmittel zur Film- und Topfkonservierung (z.B. Isothiazolinon-Derivate, Bronopol, IPBC, Formaldehyd und/oder Formaldehyddepotstoffe) und/oder Biozide zu verstehen.

Die Erfindung betrifft ferner einen Prämix für ein Beschichtungsmittel, der erfindungsgemäße Hohlteilchen enthält. Ein Prämix kann insbesondere die hier aufgeführten Bestandteile für ein Beschichtungsmittel mit Ausnahme von Wasser und/oder Lösungsmittel enthalten.

Vorzugsweise weist das erfindungsgemäße Beschichtungsmittel eine Nassabriebbeständigkeit gemäß DIN EN ISO 11998 von mindestens weniger als 100 Mikrometer bei 40 Hüben, bevorzugt von weniger als 70 Mikrometer bei 40 Hüben, noch bevorzugt von weniger als 70 Mikrometer bei 200 Hüben, noch weiter bevorzugt von weniger als 20 Mikrometer bei 200 Hüben auf.

Vorzugsweise weist das erfindungsgemäße Beschichtungsmittel ein Deckvermögen gemäß DIN EN ISO 6504-3 von mindestens 94% bei 5 m²/l, bevorzugt von mindestens 95% bei 5 m²/l, noch bevorzugt von mindestens 98% bei 5 m²/l, noch weiter bevorzugt von 99,5 % bei 5 m²/l auf.

Geeignete Verfahren zur Herstellung des erfindungsgemäßen Beschichtungsmittels sind dem Fachmann bekannt. Zur Herstellung des erfindungsgemäßen Beschichtungsmittels kann beispielhaft wie folgt vorgegangen werden:
- Vorlegen von Anteilen Wasser und/oder Lösemittel;
- Zumischen eines Hilfsmittels ausgewählt aus der Gruppe bestehend aus Verdicker, Netz- und/oder Dispergiermittel, Entschäumer, und Neutralisationsmittel, sowie Mischungen davon;
- bei Bedarf: Zumischen von Anteilen filmbildenen Polymers;
- bei Bedarf: Zumischen mindestens eines anorganischen Füllstoffs und/oder anorganischen bzw. organischen Pigments;
- Dispergieren und/oder Mahlen durch eine bedarfsgerechte Scherung;
- Zumischen der erfindungsgemäßen Hohlteilchen;
- Zumischen mindestens eines filmbildenden Polymers;
- Homogenisieren der Mischung;
- Zumischen eines weiteren Hilfsmittels ausgewählt aus der Gruppe Entschäumer, Substratbenetzer, und oberflächenaktive Substanzen wie Verlaufsmittel und Kratzschutzmittel, sowie Mischungen davon;
- Zumischen von Wasser und/oder Lösemittel auf 100 Gew.%.

## Patentansprüche

1. Hohlteilchen umfassend eine einen Hohlraum bildende äußere Schale (6) und ein von der äußeren Schale (6) zumindest teilweise umschlossenes inneres Material (4), wobei die äußere Schale (6) einen Brechungsindex von 1,3 bis 2,5 und das innere Material (4) einen Brechungsindex von 1,4 bis 3,2 aufweisen, und wobei das innere Material (4) das Volumen des Hohlraums teilweise ausfüllt, **dadurch gekennzeichnet, dass** die äußere Schale (6) ein polymeres Material enthält und das innere Material (4) ausgewählt ist aus der Gruppe bestehend aus Kreide, Talkum, Dolomit, Aluminiumhydroxid, Gibbsitt, Calciumcarbonat, Calcit, Bariumsulfat, Glimmer, Quarz, Wollastonit, Kaolin, Kieselgur, Perlite, Feldspat, Silika-Sol, Kieselsäure, und Basalt und Mischungen davon.

2. Hohlteilchen nach Anspruch 1, **dadurch gekennzeichnet, dass** das innere Material (4) von der äußeren Schale (6) im Wesentlichen vollständig umschlossen ist; und/oder wobei das polymere Material durch Polyreaktion erhalten wurde.

3. Hohlteilchen nach einem der Ansprüche 1 oder 2, **dadurch gekennzeichnet, dass** das polymere Material durch Polymerisation eines zumindest teilweise ungesättigten Monomersystems erhalten wurde.

4. Hohlteilchen nach Anspruch 1, **dadurch gekennzeichnet, dass** das innere Material (4) ausgewählt ist aus der Gruppe bestehend aus Calciumcarbonat, Talkum, Dolomit, Kaolin und Bariumsulfat und Mischungen davon.

5. Hohlteilchen nach einem der vorstehenden Ansprüche, **dadurch gekennzeichnet, dass** sich in dem Hohlraum neben dem inneren Material (4) ein Gas (3) und/oder eine Flüssigkeit (2) befindet; und/oder dass der Hohlraum von 0,01 bis 60 Vol.%, insbesondere von 2 bis 30 Vol.%, bezogen auf das Volumen des Hohlraums, Gas (3) und/oder Flüssigkeit (2) enthält.

6. Hohlteilchen nach Anspruch 5, **dadurch gekennzeichnet, dass** das Gas (3) Luft ist;
und/oder dass die Flüssigkeit (2) Wasser; und/oder ein Lösemittel, insbesondere ausgewählt aus der Gruppe bestehend aus Texanol, Ethanol, Isopropanol, Isobutanol, Methoxypropanol, Butylglykol, Butyldiglykol, Propylenglykol, Isoparaffin und Testbenzin, ist.

7. Hohlteilchen nach einem der vorstehenden Ansprüche, **dadurch gekennzeichnet, dass** das Hohlteilchen eine kugel-, rotationsellipsoid- oder polyeder-artige Form aufweist; und/oder dass das Hohlteilchen einen mittleren Durchmesser von 0,1 bis 10 Mikrometer, insbesondere von 0,1 bis 5 Mikrometer oder von 0,2 bis 2 Mikrometer aufweist.

8. Hohlteilchen nach einem der vorstehenden Ansprüche, **dadurch gekennzeichnet, dass** sich in dem Hohlraum ein oder mehrere Teilchen des inneren Materials (4) befinden.

9. Hohlteilchen nach Anspruch 8, **dadurch gekennzeichnet, dass** sich in dem Hohlraum ein poröses Konglomerat aus Teilchen des inneren Materials (4) befindet; und/oder dass das Teilchen des inneren Materials (4) einen mittleren Durchmesser von 0,05 bis 1 Mikrometer, insbesondere von 0,1 bis 0,5 Mikrometer, aufweist.

10. Verfahren zur Herstellung eines Hohlteilchens nach einem der vorstehenden Ansprüche **gekennzeichnet durch** folgende Verfahrensschritte:
a. Dispergieren eines Materials mit einem Brechungsindex zwischen 1,4 und 3,2 in einem flüssigen Medium und
b. Durchführen einer Polyreaktion in Gegenwart der Suspension aus Schritt a., um das Material zumindest teilweise zu umschließen,
**dadurch gekennzeichnet, dass** das Material aus Schritt a. ausgewählt ist aus der Gruppe bestehend aus Kreide, Talkum, Dolomit, Aluminiumhydroxid, Gibbsitt, Calciumcarbonat, Calcit, Bariumsulfat, Glimmer, Quarz, Wollastonit, Kaolin, Kieselgur, Perlite, Feldspat, Silika-Sol, Kieselsäure, und Basalt und Mischungen davon, wobei das Verfahren die Zugabe einer Base als Quellmittel umfasst und wobei das umschließende Material **durch** Polyreaktion eines zumindest teilweise oder gänzlich ungesättigten Monomersystems erhalten wird.

11. Verfahren nach Anspruch 10, **dadurch gekennzeichnet, dass** das Material der äußeren Schale (6) durch Polymerisation, eines zumindest teilweise ungesättigten Monomersystems erhalten wurde.

12. Beschichtungsmittel enthaltend, bezogen auf die Gesamtmenge des Beschichtungsmittels,
- 0,5 bis 30 Gew.% Hohlteilchen gemäß einem der Ansprüche 1 bis 9,
- 0,5 bis 40 Gew.% mindestens eines filmbildenden Polymers,
- 0 bis 70 Gew.% mindestens eines anorganischen Füllstoffs und/oder Pigments,
- 0 bis 10 Gew.% eines Hilfsmittels ausgewählt aus der Gruppe bestehend aus Verdicker, Netzmittel, Dispergiermittel, Entschäumer, Neutralisationsmittel, Substratbenetzer, oberflächenaktive Substanzen, Verlaufsmittel und Kratzschutzmittel, oder Mischungen davon,
- Rest Wasser und/oder Lösemittel.

13. Beschichtungsmittel nach Anspruch 12, **dadurch gekennzeichnet, dass** dieses, bezogen auf die Gesamtmenge des Beschichtungsmittels, 1 bis 20 Gew.%, insbesondere 2 bis 12 Gew.% oder 3 bis 8 Gew.% Hohlteilchen enthält; und/oder dass dieses, bezogen auf die Gesamtmenge des Beschichtungsmittels, 1 bis 25 Gew.%, insbesondere 2 bis 15 Gew.% oder 3 bis 10 Gew.% filmbildende Polymere enthält; und/oder dass dieses, bezogen auf die Gesamtmenge des Beschichtungsmittels, 5 bis 60 Gew.%, insbesondere 10 bis 50 Gew.% oder 15 bis 40 Gew.% Füllstoff enthält; und/oder dass dieses, bezogen auf die Gesamtmenge des Beschichtungsmittels, 0,5 bis 25 Gew.%, insbesondere 0,5 bis 15 Gew.% Pigment enthält.

14. Beschichtungsmittel nach einem der Ansprüche 12 oder 13, **dadurch gekennzeichnet, dass** das Beschichtungsmittel ein Anstrichmittel, insbesondere eine wässrige Dispersionsfarbe, ein Lack oder ein Putz, ist.

15. Verwendung eines Hohlteilchen nach einem der Ansprüche 1 bis 9 zur Herstellung eines Beschichtungsmittels.

16. Prämix für ein Beschichtungsmittel enthaltend Hohlteilchen nach einem der Ansprüche 1 bis 9.

## Claims

1. Hollow particle comprising an outer shell (6) forming a hollow space and an inner material (4) at least partially enclosed by the outer shell (6), wherein the outer shell (6) has a refractive index of 1.3 to 2.5 and the inner material (4) has a refractive index of 1.4 to 3.2, and wherein the inner material (4) partially fills in the volume of the hollow space, **characterized in that** the outer shell (6) contains a polymeric material and the inner material (4) is selected from the group consisting of chalk, talcum, dolomite, aluminum hydroxide, gibbsite, calcium carbonate, calcite, barium sulfate, mica, quartz, wollastonite, kaolin, diatomaceous earth, perlite, feldspar, silica sol, silicic acid, and basalt and mixtures thereof.

2. Hollow particle according to claim 1, **characterized in that** the inner material (4) is essentially completely enclosed by the outer shell (6); and/or wherein the polymeric material was obtained by polyreaction.

3. Hollow particle according to one of claims 1 or 2, **characterized in that** the polymeric material was obtained by polymerization of an at least partially unsaturated monomer system.

4. Hollow particle according to claim 1, **characterized in that** the inner material (4) is selected from the group consisting of calcium carbonate, talcum, dolomite, kaolin and barium sulfate and mixtures thereof.

5. Hollow particle according to one of the preceding claims, **characterized in that** the hollow space contains a gas (3) and/or a liquid (2) aside from the inner material (4); and/or
**in that** the hollow space contains from 0.01 to 60 vol%, in particular from 2 to 30 vol%, based on the volume of the hollow space, of gas (3) and/or liquid (2).

6. Hollow particle according to claim 5, **characterized in that** the gas (3) is air; and/or in that the liquid (2) is water; and/or a solvent, in particular selected from the group consisting of texanol, ethanol, isopropanol, isobutanol, methoxypropanol, butyl glycol, butyl diglycol, propylene glycol, isoparaffin and test gasoline.

7. Hollow particle according to one of the preceding claims, **characterized in that** the hollow particle has a spherical, spheroidal or polyhedron-like shape; and/or
**in that** the hollow particle has an average diameter of 0.1 to 10 micrometers, in particular of 0.1 to 5 micrometers or of 0.2 to 2 micrometers.

8. Hollow particle according to one of the preceding claims, **characterized in that** one or more particles of the inner material (4) are present in the hollow space.

9. Hollow particle according to claim 8, **characterized in that** a porous conglomerate of particles of the inner material (4) is present in the hollow space; and/or
**in that** the particle of the inner material (4) has an average diameter of 0.05 to 1 micrometer, in particular of 0.1 to 0.5 micrometer.

10. Process for producing a hollow particle according to one of the preceding claims, **characterized by** the following process steps:
a. dispersing a material with a refractive index between 1.4 and 3.2 in a liquid medium and
b. performing a polyreaction in the presence of the suspension from step a. so as to at least partly enclose the material,
**characterized in that** the material from step a. is selected from the group consisting of chalk, talcum, dolomite, aluminum hydroxide, gibbsite, calcium carbonate, calcite, barium sulfate, mica, quartz, wollastonite, kaolin, diatomaceous earth, perlite, feldspar, silica sol, silicic acid, and basalt and mixtures thereof, wherein the process comprises the addition of a base as swelling agent and wherein the enclosing material is obtained by polyreaction of an at least partially or fully unsaturated monomer system.

11. Process according to claim 10, **characterized that** the material of the outer shell (6) was obtained by polymerizing an at least partially unsaturated monomer system.

12. Coating agent containing, based on the total amount of the coating agent,
- 0.5 to 30 wt% of hollow particles according to one of the claims 1 to 9,
- 0.5 to 40 wt% of at least one film-forming polymer,
- 0 to 70 wt% of at least one inorganic filler and/or pigment,
- 0 to 10 wt% of an additive selected from the group consisting of thickening agents, wetting agents, dispersing agents, antifoaming agents, neutralizing agents, substrate wetting agents, surface-active substances, leveling agents and scratch protection agents, or mixtures thereof,
- the remainder being water and/or solvent.

13. Coating agent according to claim 12, **characterized in that** the latter contains, based on the total amount of the coating agent, 1 to 20 wt%, in particular 2 to 12 wt% or 3 to 8 wt% of hollow particles; and/or
**in that** the latter contains, based on the total amount of the coating agent, 1 to 25 wt%, in particular 2 to 15 wt% or 3 to 10 wt% of film forming polymers; and/or
**in that** the latter contains, based on the total amount of the coating agent, 5 to 60 wt%, in particular 10 to 50 wt% or 15 to 40 wt% of filler; and/or
**in that** the latter contains, based on the total amount of the coating agent, 0.5 to 25 wt%, in particular 0.5 to 15 wt% of pigment.

14. Coating agent according to one of claims 12 or 13, **characterized in that** the coating agent is a coating material, in particular an aqueous dispersion paint, a lacquer or a plaster.

15. The use of a hollow particle according to one of claims 1 to 9 for the production of a coating agent.

16. Premix for a coating agent containing hollow particles according to one of claims 1 to 9.

## Revendications

1. Particule creuse comprenant une coque externe (6) formant une cavité et un matériau interne (4) au moins partiellement enfermé par la coque externe (6), dans laquelle la coque externe (6) présente un indice de réfraction de 1,3 à 2,5 et le matériau interne (4) présente un indice de réfraction de 1,4 à 3,2, et dans laquelle le matériau interne (4) remplit partiellement le volume de la cavité, **caractérisée en ce que** la coque externe (6) contient un matériau polymère et le matériau interne (4) est choisi dans le groupe constitué de la craie, du talc, de la dolomite, de l'hydroxyde d'aluminium, de la gibbsite, du carbonate de calcium, de la calcite, du sulfate de baryum, du mica, du quartz, de la wollastonite, du kaolin, de la terre de diatomées, de la perlite, du feldspath, du sol de silice, de la silice et du basalte et des mélanges de ceux-ci.

2. Particule creuse selon la revendication 1, **caractérisée en ce que** le matériau interne (4) est enfermé de manière essentiellement complète par la coque externe (6) ; et/ou dans laquelle le matériau polymère a été obtenu par polyréaction.

3. Particule creuse selon l'une des revendications 1 ou 2, **caractérisée en ce que** le matériau polymère a été obtenu par polymérisation d'un système monomère au moins partiellement insaturé.

4. Particule creuse selon la revendication 1, **caractérisée en ce que** le matériau interne (4) est choisi dans le groupe constitué du carbonate de calcium, du talc, de la dolomite, du kaolin et du sulfate de baryum et des mélanges de ceux-ci.

5. Particule creuse selon l'une des revendications précédentes, **caractérisée en ce qu**'un gaz (3) et/ou un liquide (2) se trouve dans la cavité à côté du matériau interne (4) ; et/ou que la cavité contient de 0,01 à 60 % en volume, en particulier de 2 à 30 % en volume, par rapport au volume de la cavité, du gaz (3) et/ou du liquide (2).

6. Particule creuse selon la revendication 5, **caractérisée en ce que** le gaz (3) est de l'air ; et/ou que le liquide (2) est de l'eau ; et/ou est un solvant, en particulier choisi dans le groupe constitué du texanol, de l'éthanol, de l'isopropanol, de l'isobutanol, du méthoxypropanol, du butylglycol, du butyldiglycol, du propylèneglycol, de l'isoparaffine et du distillat de pétrole.

7. Particule creuse selon l'une des revendications précédentes, **caractérisée en ce que** la particule creuse présente une forme sphérique, ellipsoïde rotative ou polyédrique ; et/ou que la particule creuse présente un diamètre moyen de 0,1 à 10 micromètres, en particulier de 0,1 à 5 micromètres ou de 0,2 à 2 micromètres.

8. Particule creuse selon l'une des revendications précédentes, **caractérisée en ce qu**'une ou plusieurs particules du matériau interne (4) se trouvent dans la cavité.

9. Particule creuse selon la revendication 8, **caractérisée en ce qu'**un conglomérat poreux de particules du matériau interne (4) se trouve dans la cavité ; et/ou que la particule du matériau interne (4) présente un diamètre moyen de 0,05 à 1 micromètre, en particulier de 0,1 à 0,5 micromètre.

10. Procédé de production d'une particule creuse selon l'une des revendications précédentes, **caractérisé par** les étapes de procédé suivantes :
a. la dispersion d'un matériau avec un indice de réfraction compris entre 1,4 et 3,2 dans un milieu liquide et
b. la réalisation d'une polyréaction en présence de la suspension de l'étape a. pour enfermer au moins partiellement le matériau,
**caractérisé en ce que** le matériau de l'étape a. est choisi dans le groupe constitué de la craie, du talc, de la dolomite, de l'hydroxyde d'aluminium, de la gibbsite, du carbonate de calcium, de la calcite, du sulfate de baryum, du mica, du quartz, de la wollastonite, du kaolin, de la terre de diatomées, de la perlite, du feldspath, du sol de silice, de la silice et du basalte et des mélanges de ceux-ci, le procédé comprenant l'addition d'une base comme agent gonflant, et le matériau enfermant étant obtenu par polyréaction d'un système monomère au moins partiellement ou entièrement insaturé.

11. Procédé selon la revendication 10, **caractérisé en ce que** le matériau de la coque externe (6) a été obtenu par polymérisation d'un système monomère au moins partiellement insaturé.

12. Agent de revêtement contenant, par rapport à la quantité totale de l'agent de revêtement,
- de 0,5 à 30 % en poids de particules creuses selon l'une des revendications 1 à 9,
- de 0,5 à 40 % en poids d'au moins un polymère filmogène,
- de 0 à 70 % en poids d'au moins une charge inorganique et/ou un pigment,
- de 0 à 10 % en poids d'un agent auxiliaire choisi dans le groupe constitué des épaississants, des agents mouillants, des agents dispersants, des antimousses, des agents neutralisants, des agents mouillants pour le substrat, des substances tensioactives, des agents nivelants et des agents anti-rayures, ou des mélanges de ceux-ci,
- pour le reste, de l'eau et/ou un solvant.

13. Agent de revêtement selon la revendication 12, **caractérisé en ce qu'**il contient, par rapport à la quantité totale de l'agent de revêtement, de 1 à 20 % en poids, en particulier de 2 à 12 % en poids ou de 3 à 8 % en poids de particules creuses ; et/ou qu'il contient, par rapport à la quantité totale de l'agent de revêtement, de 1 à 25 % en poids, en particulier de 2 à 15 % en poids ou de 3 à 10 % en poids, de polymères filmogènes ; et/ou qu'il contient, par rapport à la quantité totale de l'agent de revêtement, de 5 à 60 % en poids, en particulier de 10 à 50 % en poids ou de 15 à 40 % en poids de charge ; et/ou qu'il contient, par rapport à la quantité totale de l'agent de revêtement, de 0,5 à 25 % en poids, en particulier de 0,5 à 15 % en poids de pigment.

14. Agent de revêtement selon l'une des revendications 12 ou 13, **caractérisé en ce que** l'agent de revêtement est une peinture, en particulier une peinture en dispersion aqueuse, un vernis ou un enduit.

15. Utilisation d'une particule creuse selon l'une des revendications 1 à 9 pour la production d'un agent de revêtement.

16. Prémélange pour un agent de revêtement contenant des particules creuses selon l'une des revendications 1 à 9.
